# EUROPEAN PATENT SPECIFICATION

(11) **EP 4 548 051 B1**
(45) Date of publication and mention of the grant of the patent: **03.06.2026**
(21) Application number: 23734683.8
(22) Date of filing: 28.06.2023
(51) Int. Cl.: G01F 23/24, B22D 2/00, C21C 5/46

(54) **MEASURING LANCE FOR THE MEASUREMENT OF A POSITION AND A THICKNESS OF A SLAG LAYER ON TOP OF A MOLTEN METAL**
MESSLANZE ZUR MESSUNG EINER POSITION UND EINER DICKE EINER SCHLACKESCHICHT AUF EINEM GESCHMOLZENEN METALL
LANCE DE MESURE POUR LA MESURE DE LA POSITION ET DE L'ÉPAISSEUR D'UNE COUCHE DE LAITIER SUR LA PARTIE SUPÉRIEURE D'UN MÉTAL FONDU

(30) Priority: 28.06.2022 EP 22181612
(43) Date of publication of application: 07.05.2025
(73) Proprietor: Vesuvius Refratarios Ltda., 18170-000 Piedade (BR); Vesuvius Group, S.A., 7011 Ghlin (BE)
(72) Inventor: MIZOTE, Roger Kendy, 18013-004 SOROCABA/SP (BR); SOLERA, Pedro Oliva, 06026-000 OSASCO/SP (BR); VICENTINI, Carlos Timotheo, 18170-000 Paulas e Mendes (BR)
(74) Representative: Brohez, Véronique
(86) International application number: PCT/EP2023/067709
(87) International publication number: WO 2024/003172

(56) References cited:
- JP-A- 2002 356 709
- JP-A- 2003 049 215
- KR-B1- 101 734 219
- US-A1- 2007 176 334

## Description

### TECHNICAL FIELD

The present invention concerns a measuring lance for measuring a position and a thickness of a slag layer sitting on top of a molten metal. The measuring lance is configured for measuring a position of an air-slag interface between an atmosphere and the slag layer, and a position of a slag-metal interface between the slag layer and the molten metal in a single measurement run. The measuring lance requires a reduced number of electrical terminals for connecting to external electrical parameters measurement hardware. This allows for implementing the measurement of the thickness of the slag layer in addition to existing measurements, and with minimal changes to the analysis device, which is an external electrical parameters' measurement hardware connected to the measuring lance.

### BACKGROUND OF THE INVENTION

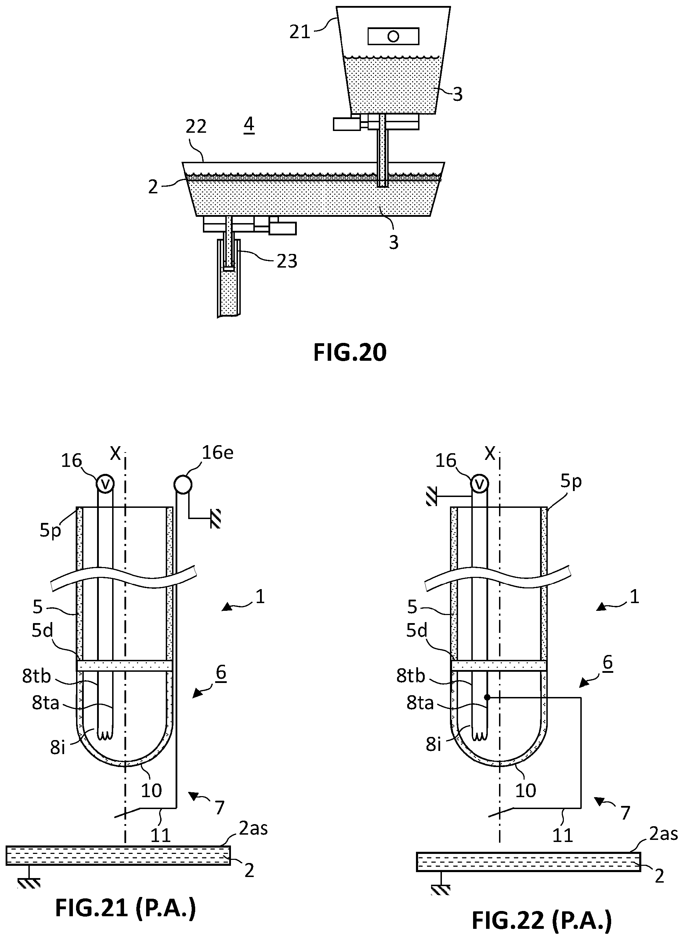

A metal production line generally comprises a number of vessels for holding and transporting molten metal, such as a ladle, a tundish, or a furnace. As shown in Figure 20, a ladle (21) can be used to transport molten metal from a furnace and pour it into a tundish (22) whence the metal melt can be cast through a pouring nozzle from a tundish outlet to a mould (23) or tool for continuously forming slabs, billets, beams, thin slabs, and the like. The molten metal in the ladle (21); the tundish (22) or even in the mould (23) is topped by a slag layer (2) formed from impurities in the metals or ores being treated, such as oxides or ashes.

In the vessel, the slag layer floats on the molten metal forming a continuous layer separating the molten metal from an atmosphere, thereby protecting it from oxidation by the atmosphere and reducing thermal losses. Measuring a position of a slag-metal interface and a thickness of the slag layer is critical as it allows for determining a quantity of molten metal contained in the vessel for preventing the slag from being entrained into the mould (23). The composition of the slag is known to impact on the composition of the molten metal. For example, the slag can contribute to the deoxidization of the molten steel. Deoxidization can be further promoted by addition into the slag of keeping agents The amount of keeping agent to be introduced for reaching a desired concentration depends on the volume of slag in the vessel, which can be determined by an accurate measurement of the positions of the air-slag interface and slag-metal interface.

Controlling the amount of the slag in a vessel is also important for assessing the state of the molten metal in the vessel. For example, the amount of slag is an important information for a metallurgist to estimate the required amount of specially killing agents (e.g., aluminium, silicon, titanium, etc) to be added to the system, since part of it is absorbed by the slag, which is often highly oxidized.

Currently, the position of the air-slag interface and the slag-metal interface are usually determined using a dedicated measuring lance comprising a measuring head configured for measuring a specific property of a surrounding material and for detecting a change in this specific property as the lance is dipped into the vessel through the slag and metal melt whose specific property differs from one another and from a surrounding atmosphere. By recording the position of the lance, the positions of the air-slag and slag-metal interfaces are determined by identifying the positions where the specific property varies suddenly by an analysis device electrically connected to the measuring head through a number of terminals. The analysis device generally comprises a voltage or resistance meter.

Measuring lances for measuring both positions of the air-slag and slag-metal interfaces and thus the thickness of the slag layer sitting on top of the molten metal are known in the art.

US7876095 B2 describes an apparatus for the determination of at least one interface of a slag layer on top of a molten metal. The apparatus comprises a carrier tube, a measuring head arranged at one end of the carrier tube and configured to pass through the slag layer, wherein a shank body of the measuring head is affixed in the carrier tube and has an end face facing away from the carrier tube. A circuit comprising an oscillator is arranged inside the shank body of the measuring head, and an induction coil is connected with the oscillator and arranged outside of the shank body of the measuring head in front of its end face. Signal lines passing through the carrier tube allow for connecting the circuit with the oscillator with an external analysis device, e.g. a computer. The induction coil can be enclosed by a protective sheath affixed to the body of the measuring head and is thereby protected from the effects of the slag. The induction coil coupled to the oscillator allows for detecting a change in a property of a surrounding material at the transition from the slag to the conductive molten metal. Advantageously, a bath contact is arranged outside the body of the measuring head, in front of its end face. This bath contact allows the additional determination of the interface between the slag layer and the air layer above it because a short circuit occurs as soon as the bath contact touches the slag (in a normal case, the slag itself is generally grounded). The bath contact is connected to the analysis device via a signal line passing through the carrier tube. The upper as well as the lower interfaces of the slag can thereby be determined, and consequently the thickness of the slag layer can be calculated. Additional sensors can be arranged on the measuring head such as a thermoelement, electro-chemical or optical sensor, so that further measurements are simultaneously possible. The additional sensors can be connected with an analysis device via other signal lines passing through the carrier tube.

WO2012/171658 A1 describes a device intended for measuring the thickness of a slag on the surface of a liquid metal contained in an ingot mould. The device comprises:
- a wire made of electrically conductive material and capable of being eliminated under the effect of the heat at the temperature of the slag, the wire comprising a free end intended to be dipped into the slag,
- means for feeding the wire, capable of displacing the wire so that its free end dips vertically into the slag according to a predetermined trajectory,
- measuring means capable of measuring a distance travelled by the free end of the wire during a time interval between two predetermined events when the latter is displaced under the action of the feeding means,
- means for controlling said feeding means, the control means comprising detection means capable of detecting contact between the free end and the surface of the liquid metal.

The device makes it possible to automatically dip the wire into the slag until it reaches the surface of the liquid metal contained in the ingot mould, to hold it in position for a predetermined duration that is sufficient for the portion of wire immersed in the slag to be eliminated under the effect of the heat, then to dip it a second time into the slag until it reaches the surface of the liquid metal. By virtue of the measuring means, the length of wire unwound during the last dip is calculated. This length corresponds to the portion of the wire immersed in the slag that has been eliminated under the effect of the heat and therefore corresponds to the thickness of the slag.

EP330264 describes a method for measuring the level of the surface of a bath of molten metal beneath a fluid layer of slag in a metallurgical vessel (i.e., the slag / metal interface), using a detector which is moved through the slag layer into the metal bath and then withdrawn. The detector used comprises an oxygen concentration sensor which emits signals allowing the position of the boundary between the molten metal and the slag to be identified. The signals from the detector are preferably monitored while the detector is withdrawn from the metal. and an increase in oxygen concentration measured is used as an indication of the said boundary as the detector passes through the slag / metal interface from the molten metal into the slag.

The detector is dipped into the bath of molten metal where the oxygen concentration sensor is exposed to the metal melt and measures an oxygen concentration of the metal melt. The detector is then pulled out of the bath of molten metal, until the oxygen concentration sensor reaches the slag-metal interface and detects a sudden change in oxygen concentration sensor, thus identifying the position of the slag-metal interface. The detector keeps moving out of the vessel until the oxygen concentration sensor has reached and crosses the air-slag interface. When this measuring lance can detect with accuracy the position of the slag-metal interface, it is not the case, however, of the position of the air-slag interface for the following reason. As it travels through the slag in its way out of the vessel, the oxygen probe is covered and polluted with slag material which jeopardizes the measurement of the position of the air-slag interface, as the oxygen probe keeps measuring oxygen content of the slag adhered to its surface at least for some time after the oxygen probe was driven out of the slag and was in the surrounding air.

To ensure the high metal parts quality required by the industry, monitoring of several parameters of the molten melt flowing through the vessels is required. If a same sensor cannot be used to measure two different parameters of the installation, the number of terminals available at the analysis device increases accordingly. For example, if a same analysis device is connected to a first sensor for measuring the slag thickness (as discussed supra) and a second sensor for measuring a temperature of the slag and / or of the metal melt, two sets of two terminals would be required to measure voltage or current from the two sensors, i.e., 4 terminals. If a third sensor is used, the analysis device should be provided with three sets of two terminals, i.e., 6 terminals. This means that a new analysis device with corresponding number of terminals is required each time more than one sensor type is connected thereto. JP 2003 049215 A discloses a measuring lance for measuring the air-slag and slag-metal interfaces, comprising a first level sensor and a second level sensor, an electric circuit and a temperature sensor. First sensor is based on a resistance measurement, while second sensor is based on an inductance measurement. Resistance drops from very high values to 0 when terminals contact the slag, while the second sensor detects no inductance because it is still in the air. When the probe proceeds further down, second level sensor reaches the molten metal layer, the inductance of the coil changes suddenly, thereby detecting the molten metal surface of the molten metal layer.

There therefore remains a need for a measuring lance suitable for accurately measuring the positions of both air-slag interface and slag-metal interface in a single run and requiring minimal change in the analysis device to which it is interfaced. In particular, the measuring lance should be suitable for performing the measurement of the positions of the air-slag and slag-metal interfaces in addition to already existing measurements, such as, but not exclusively, a temperature, without requiring additional electrical terminals for connecting to an existing analysis device. The present invention proposes such measuring lance. These and other advantages are described in detail in the following sections.

### SUMMARY OF THE INVENTION

The appended independent claims define the present invention. The dependent claims define preferred embodiments.

The present invention concerns a measuring lance for measuring a position (has) of an air-slag interface between an atmosphere and a slag layer sitting on top of a molten metal, and a position of a slag-metal interface between the slag layer and the molten metal in a single measurement run, the measuring lance comprising:
- a carrier tube extending along an axis (X) between a proximal end and a distal end located downstream of the proximal end,
- a measuring unit coupled to the distal end of the carrier tube and configured for passing through the slag layer, the measuring unit comprising,
   ∘ an electric circuit configured for detecting the air-slag interface,
   ∘ a slag-metal interface detection unit located downstream of the distal end, comprising at least first and second electric measuring terminals, and configured for measuring values of a first material property at the position of the slag-metal interface between the slag layer and the molten metal, and
   ∘ preferably a sensor unit comprising first and second electric sensor terminals and configured for measuring values of a second material property of the slag layer and of the molten metal,
   ∘ a cap enclosing the slag-metal interface detection unit and optionally the sensor unit, configured for separating the slag-metal interface detection unit from an outer environment,

wherein the electric circuit comprises a first conducting element comprising a first end conductively coupled to the first electric measuring terminal and / or to the first electric sensor terminal (9ta), and a second end arranged outside of the cap, preferably downstream of the cap, and wherein, the electric circuit comprises a thermal fuse located between the first end and the second end of the first conducting element and configured for thermally blowing to open the electric circuit after the first conducting element contacted the air-slag interface,
wherein the term "downstream" is defined along the axis (X) in the direction running from the proximal end to the distal end.

Preferably, the measuring lance comprises the sensor unit which is a thermocouple, wherein the first and second electric sensor terminals are configured for electrically connecting to an analysis device, wherein the analysis device is preferably a voltage measurement device.

The the slag metal interface detection unit can have any one of the following detector configurations.
- In an **oxygen-configuration** of the measuring lance according to the invention, the slag metal interface detection unit comprises an oxygen probe for measuring a concentration of oxygen, comprising an oxygen cell connected to the first electric measuring terminal and a reference electrode connected to the second electric measuring terminal, and the cap is configured for degrading to expose the oxygen probe to a surrounding environment upon exposure to a predefined temperature for a predefined exposure time, and the thermal fuse is preferably configured for thermally blowing at the latest once the cap is degraded.
- In an **induction configuration,** the slag metal interface detection unit comprises an induction coil for detecting a change in magnetic permeability of the surrounding environment.

The electric circuit can also have any one of the following electric configurations, which can be combined in any way with any one of the foregoing detector configurations.

In a **sensor configuration** of the electric circuit of the measuring lance according to the invention:
- the first end of the first conducting element is conductively coupled to the first electric measuring terminal and the second end thereof is conductively coupled to a contact sensor,
- the electric circuit comprises a second conducting element comprising a first end conductively coupled to the second electric measuring terminal, and a second end thereof conductively coupled to the contact sensor.

The contact sensor can be selected between,
- a **switch configuration,** comprising a mechanical switch biased in an open position and configured to move into a closed position upon application of a mechanical force corresponding to a force generated upon contacting the mechanical switch with the air-slag interface, to conductively connect the first and second conducting elements, wherein the thermal fuse is configured for thermally blowing once the switch is in the closed position, or
- a **piezo-configuration,** wherein a piezoelectric detector is configured for generating an electrical current upon application of a mechanical force corresponding to a force generated upon contacting the piezoelectric detector with the air-slag interface, wherein the thermal fuse is configured for thermally blowing after the piezoelectric detector has generated the electrical current.

In a **grounded configuration** of the electric circuit, the electric circuit comprises the first conducting element only. The slag and second electric measuring terminal are grounded to the earth.

In a preferred embodiment of the sensor configuration of the electric circuit of a lance comprising a sensor unit (e.g., a thermocouple),
- the first end of the first conducting element is conductively coupled to the first electric sensor terminal and the second end thereof is conductively coupled to the contact sensor,
- the second conducting element comprising a first end conductively coupled to the second electric sensor terminal, and a second end thereof conductively coupled to the contact sensor.

In a preferred embodiment, a portion of an external surface of the cap is conductive and is comprised in the first or optionally in the second conducting elements.

For example, the mechanical switch in the switch configuration of the electric circuit preferably comprises,
- a second member belonging to the second conducting element and solidly attached to the cap, and
- a first member belonging to the first conducting element and non-conductively separated from the second member and attached to the cap through a resilient member wherein the resilient member is biased for separating the first member from the second member, and for deforming upon application of the mechanical force, to conductively connect the first and second members.

In a preferred embodiment of a measuring lance comprising the sensor unit and wherein the electric circuit has the sensor configuration,
- the first end of the first conducting element is electrically coupled to both oxygen cell of the oxygen probe and first electric sensor terminal, or
- the second conducting element is connected to both reference electrode of the oxygen probe and second electric sensor terminal.

The present invention also concerns a method for determining in a metallurgic container a position of an air-slag interface between an atmosphere and a slag layer sitting on top of a molten metal, and a position of a slag metal interface (2sm) between the slag layer and the molten metal comprising:
- position a measuring lance according to anyone of the preceding claims above the air slag interface with the second end of the first conducting element positioned closest to the air-slag interface,
- start measuring a vertical position of the measuring lance along a vertical axis (Z) substantially normal to the air slag interface,
- start measuring values of the first material property with the slag metal interface detection unit (8),
- start measuring an electrical property of the first conducting element,
- translate the measuring lance along at least a vertical component parallel to the vertical axis (Z), downwards, towards the air-slag interface,
- upon detection of a gradient in the electrical property of the first conducting element indicative that the second end of the first conducting element has contacted the air slag interface, recording the vertical position of the measuring lance as the position (has) of the air-slag interface,
- keep translating downwards the measuring lance along the vertical component sufficiently far to ensure that the measuring unit is in the molten metal, beyond the slag-metal interface,
- allow the thermal fuse to blow and thus conductively separating the first end from the second end of the first conducting element,
- measure the values of the first material property with the slag metal interface detection unit and maintain the measuring unit in the molten metal (3) until the measured values of the first material property become substantially constant,
- translating the slag metal interface detection unit along the vertical component upwards, towards the slag metal interface,
- upon detection of a sharp gradient in the values of the first material property measured with the slag metal interface detection unit, recording the vertical position of the measuring lance as the position of the slag metal interface,
- keep translating upwards the measuring lance along the vertical component until it is totally in the atmosphere.

In a preferred embodiment of the method according to the invention, wherein the slag-metal interface detection unit is an oxygen probe for measuring a concentration of oxygen as defined supra, wherein the measuring lance comprises,
- a sensor unit consisting of a thermocouple for measuring values of a temperature of a surrounding environment, and
- an intelligence for correcting the concentration of oxygen measured by the oxygen probe as a function of the temperature measured by the thermocouple.

### BRIEF DESCRIPTION OF THE FIGURES

For a fuller understanding of the nature of the present invention, reference is made to the following detailed description taken in conjunction with the accompanying drawings in which:
**Figures 1 to 12****:** show schematic views of various embodiments of the measuring unit of the measuring lance according to the invention.
**Figure 13****:** is a schematic representation of a measuring lance at different vertical positions with respect to the metal melt and slag contained in a vessel (here a tundish) as a function of time.
**Figure 14(a)****:** illustrates the working principle of the measuring lance of the present invention, with various configurations of the electric circuit of the measuring unit as it is driven into and out of the metal melt during the measuring operation, and wherein the thermal fuse blows before the cap degrades.
**Figure 14(b)****:** illustrates the evolution of the voltage as a function of time measured with the measuring unit in correspondence with the different positions of the measuring unit illustrated in Figure 14(a).
**Figure 15(a)****:** illustrates the working principle of the measuring lance of the present invention, with various configurations of the electric circuit of the measuring unit as it is driven into and out of the metal melt during the measuring operation, and wherein the thermal fuse blows after the cap degrades.
**Figure 15(b)****:** illustrates the evolution of the voltage as a function of time measured with the measuring unit in correspondence with the different positions of the measuring unit illustrated in Figure 15(a).
**Figures 16 to 19****:** show detailed views of configurations of the electric circuit of the measuring lance at different positions (A), (B), (C), (D) to (F) as labelled in Figure 14(a).
**Figure 20****:** illustrates a continuous metal casting installation comprising a ladle pouring molten metal into a tundish coupled to a mould.
**Figure 21****:** illustrates a measuring lance for determining the positions of the air-slag and slag-metal interfaces according to the prior art.
**Figure 22****:** illustrates a measuring lance of Figure 21 modified to reduce the number of electric terminals.

### DETAILED DESCRIPTION OF THE INVENTION

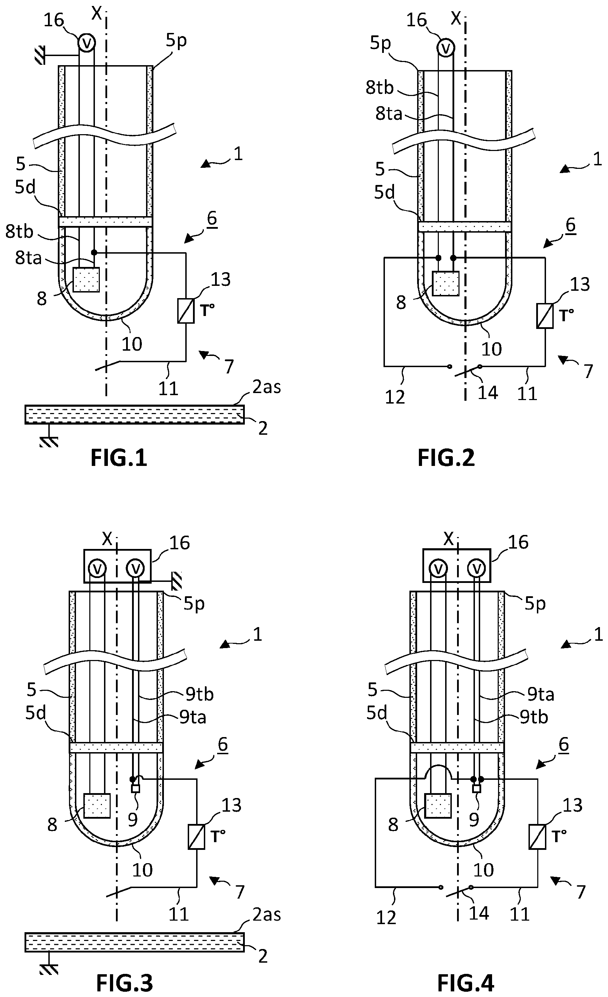

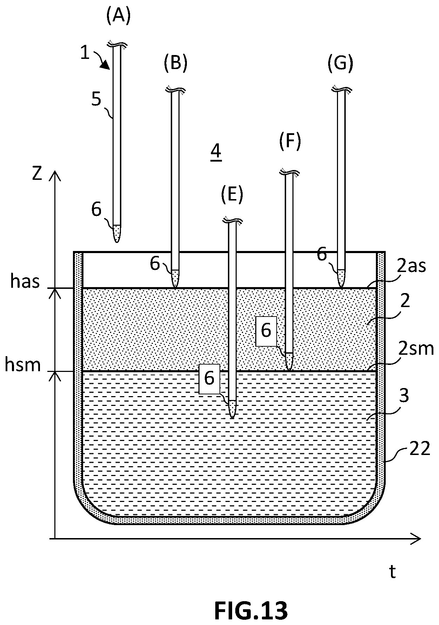

As shown in Figure 13, the present invention concerns a measuring lance (1) for measuring in a single measurement run, on the one hand, a position (has) of an air-slag interface (2as) between an atmosphere (4) and a slag layer (2) sitting on top of a molten metal (3) and , on the other hand, a position (hsm) of a slag-metal interface (2sm) between the slag layer (2) and the molten metal (3). As shown in Figure 1 and 2, the measuring lance (1) comprises a carrier tube (5) extending along an axis (X) between a proximal end (5p) and a distal end (5d) located downstream of the proximal end (5p), wherein the term *"downstream"* is used herein relative to the motion direction of the measuring lance at it is dipped into the vessel, through the slag and then into the metal melt. For example, the carrier tube (5) can be a pole or elongated hollow tube. As shown in Figure 1 and 2, the measuring lance (1) comprises a measuring unit (6) coupled to the distal end (5d) of the carrier tube (5) and configured for passing through the slag layer (2). The measuring unit (6) comprises:
- an electric circuit (7) configured for detecting the air-slag interface (2as),
- a slag-metal interface detection unit (8) located downstream of the distal end (5d) of the carrier tube (5) and comprising at least a first electric measuring terminal (8ta) and a second electric measuring terminal (8tb), the slag-metal interface detection unit (8) being configured for measuring values of a first material property at the position (hsm) of the slag-metal interface (2sm) between the slag layer (2) and the molten metal (3),
- a cap (10) enclosing the slag-metal interface detection unit (8) and configured for separating the slag-metal interface detection unit (8) from an outer environment outside the cap (10).

As shown in Figure 13, the metallurgical installation is provided with means for driving the measuring lance in both directions along the vertical axis (Z) at a controlled velocity, such that at all times, the position of the measuring lance along the vertical axis (Z) is known and recorded.

As shown in Figure 3 and 4, the measuring unit (6) preferably comprises a sensor unit (9) having a first electric sensor terminal (9ta) and a second electric sensor terminal (9tb), the sensor unit (9) being configured for measuring values of a second material property of the slag layer (2) and of the molten metal (3). The sensor unit (9) is preferably, but not necessarily, enclosed in the cap (10) to separate the sensor unit (9) from the outer environment.

As shown in Figure 1-12, the measuring lance (1) is characterized in that the electric circuit (7) comprises a first conducting element (11) comprising a first end conductively coupled to the first electric measuring terminal (8ta) and / or to the first electric sensor terminal (9ta), and a second end arranged outside and preferably downstream of the cap (10), wherein the term "downstream" in the invention is defined along the axis (X) in the direction running from the proximal end (5p) to the distal end (5d). The second end of the first conducting element (11) preferably defines a distal end of the measuring lance, i.e, the first to contact the air-slag interface as the measuring lance is driven into the vessel through the slag layer and into the molten metal along the vertical axis (Z).

The measuring lance (1) is also characterized in that the electric circuit (7) comprises a thermal fuse (13) located between the first end and the second end of the first conducting element (11) and configured for thermally blowing to open the electric circuit (7) after the first conducting element (11) contacted the air-slag interface (2as).

### ELECTRIC CIRCUIT (7)

The electric circuit (7) is exclusively configured for determining the position of the air-slag interface (2as). The principle of the electric circuit (7) is to be in a first electrical configuration as long as it is entirely in the atmosphere (4) and to instantly move to a second electrical configuration as soon as it contacts the air-slag interface (2as). Several embodiments are proposed.

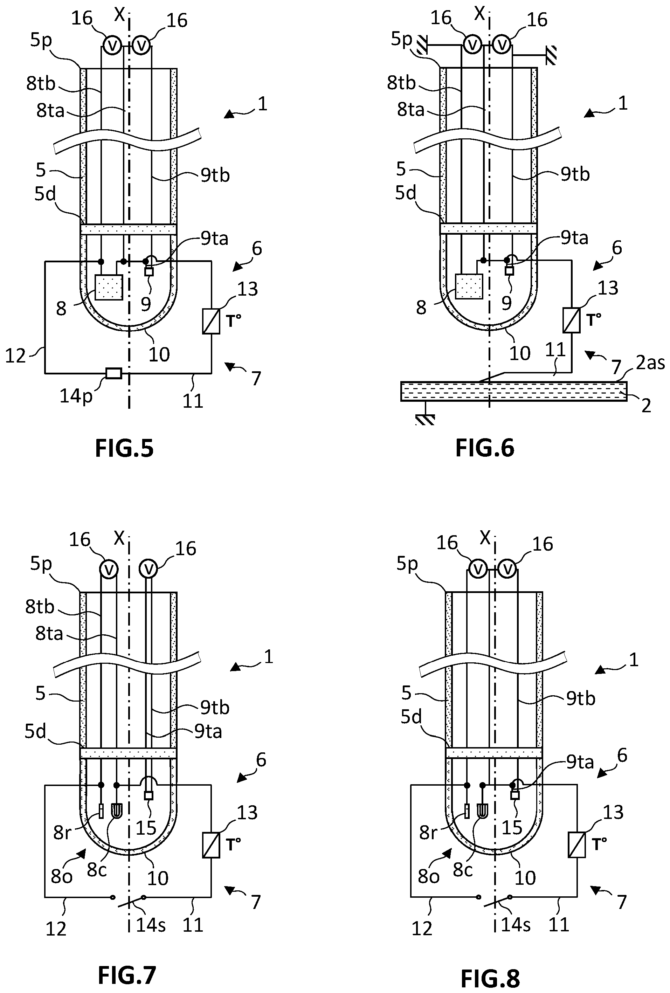

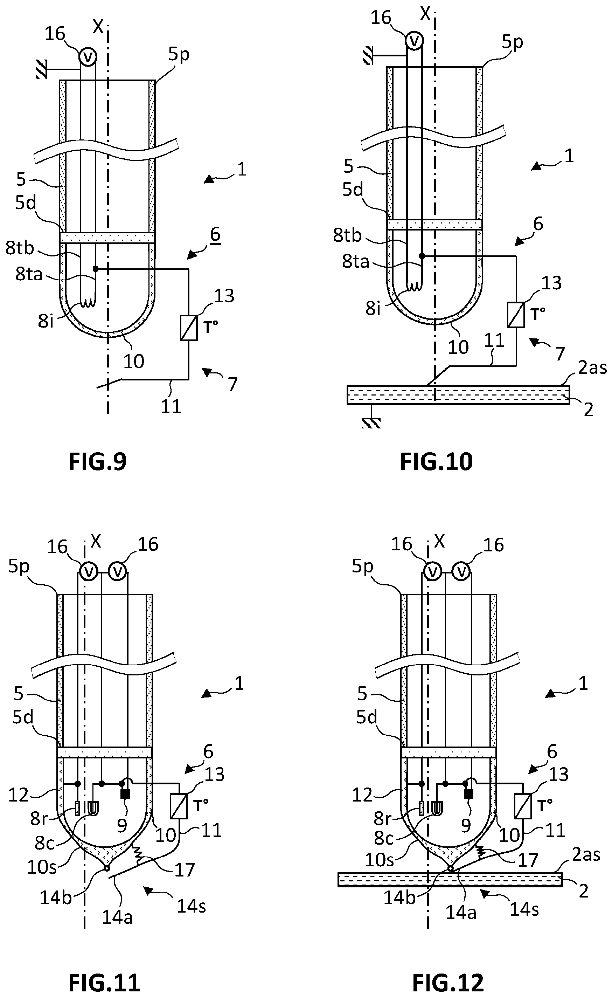

In a first configuration (= "grounded-configuration"), illustrated in Figures 1, 3, 6, 9, and 10, the first conducting element (11) only is coupled to the measuring unit (6). As mentioned supra, the first conducting element (11) comprises a first end conductively coupled to the first electric measuring terminal (8ta) and / or to the first electric sensor terminal (9ta), and a second end arranged outside of the cap (10) and at a defined position along the axis (X) of the measuring unit. The second end is preferably located downstream of the cap (10) so that it is the first component of the measuring lance to contact the air-slag interface as the measuring lance is being dipped into the vessel. This is advantageous since the air-slag interface is undisturbed by the penetration of the measuring lance through the slag layer when the contact between the second end and the air-slag interface happens. The slag is electrically grounded. As shown in Figures 6 and 10, when the second end of the first conducting element (11) contacts the electrically grounded slag layer (2), the entire electric circuit (7) is electrically grounded and short circuited. As this happens, the analysis device (16) measures zero-voltage difference or current, which is indicative of the position of the air-slag interface (2as). This embodiment can be implemented to metallurgic installations wherein the slag is electrically conductive, which is often, albeit not always the case.

In a second configuration (= "sensor-configuration") ", illustrated in Figures 2, 4, 5, 7, 8, 11, 12, the first end of the first conducting element (11) is conductively coupled to the first electric measuring terminal (8ta) and / or to the first electric sensor terminal (9ta), and the second end thereof is conductively coupled to a contact sensor (14). The electric circuit (7) comprises a second conducting element (12) comprising a first end conductively coupled to the second electric measuring terminal (8tb) and / or to the second electric sensor terminal (9tb), and a second end thereof conductively coupled to the contact sensor (14). This embodiment can be implemented regardless of whether the slag is electrically conductive or not.

As shown in Figures 2, 4, 7, 8, 11, 12, the contact sensor (14) is preferably a mechanical switch (14s) (= "switch-configuration") biased in an open position and configured to move into a closed position as soon as it contacts the air-slag interface (2as) as a mechanical force is thus applied thereon. The electric circuit (7) is thus closed, thus short-circuiting the electric circuit (7) as the first conducting element (11) conductively connects to the second conducting element (12). As this happens, a zero- voltage or current is measured by the analysis device (16), which is indicative of the position of the air-slag interface (2as).

Alternatively, as shown in Figure 5, the contact sensor (14) can be a piezoelectric detector (14p) (= "piezo-configuration") configured for generating an electrical current upon application of a mechanical force corresponding to a force generated upon contacting the piezoelectric detector (14p) with the air-slag interface (2as). As this happens, a different voltage or current is measured by the analysis device (16), which is indicative of the position of the air-slag interface (2as).

As shown in Figure 21 (prior art), the first and optionally the second conducting element (11, 12) could form an electric circuit (7) independent of the electric measuring and sensor terminals. But this would increase the number of electric terminals to be connected to the analysis device (16). This seemingly simple amendment of adding an electric circuit (7) to the measuring lance would then require providing a new analysis device (16) equipped with more connecting terminals. According to the present invention, the first and optionally the second conducting elements (11, 12) are coupled to any one, optionally any two of the first and second electric measuring terminals (8ta, 8tb) of the slag-metal interface detection unit (8) or of the first and second electric sensor terminals (9ta, 9tb) of the sensor unit (9), so that no new connecting terminal is required to couple the electric circuit (7) to the analysis device. The same analysis device (16) can thus be used with a measuring lance devoid of the electrical circuit (7) according to the prior art, as well as with a measuring lance equipped with the electrical circuit (7) according to the present invention.

As soon as the second end of the first conducing element (11) or as soon as the contact sensor (14) contacts the air-slag interface (2as), the electric circuit (7) moves to the second electrical configuration, which is a short circuit for the earth- and switch-configurations and is a stress-voltage for the piezo-configuration. This would have no importance in case the electric circuit (7) were independent of the slag-metal interface detection unit (8) or the sensor unit (9). As discussed supra, however, to reduce the number of electric terminals to be connected to the analysis device, the first and optionally the second conducting elements (11, 12) are coupled to any one or two of the first and second electric measuring terminals (8ta, 8tb) of the slag-metal interface detection unit (8) and of the first and second electric sensor terminals (9ta, 9tb) of the sensor unit (9). This has the effect that the analysis device (16) measures an electrical signal which is strongly influenced by the second electrical configuration of the electric circuit (7). This is particularly the case,
- when the second electrical configuration is a short circuit and a zero-voltage or current can be measured by the analysis device (16), and
- when the contact sensor (14) is a piezoelectric detector (14p), as the electrical current generated upon application of a mechanical force to the piezoelectric detector (14p) varies with the depth of immersion of the piezoelectric detector (14p) and with the density of the medium it travels through (viz., slag layer and metal melt).

In such conditions, the slag-metal interface detection unit (8) and / or the sensor unit (9) cannot measure any parameter at all or at least with sufficient accuracy. It is therefore necessary to "neutralize" the electric circuit once it has completed its function of identifying the position of the air-slag interface (2as), so that from that moment of time, both slag-metal interface detection unit (8) and sensor unit (9) are in a configuration wherein they can measure the corresponding parameters again. "Neutralizing" the electric circuit is meant herein to modify the electric circuit (7) so that it ceases to influence the voltage difference measured by the analysis device (16) between the first and second electric measuring terminals (8ta, 8tb) or between the first and second electric sensor terminals (9ta, 9tb).

To "neutralize" the effects of the electric circuit (7) when it is in the second electrical configuration, the present invention proposes to open the electric circuit. In all embodiments, but the piezoelectric detector (14p), this corresponds to the first electrical configuration. Once the electric circuit is open, the slag-metal interface detection unit (8) and the sensor unit (9) can measure again the parameters they are designed for. In order to open the electric circuit (7), a thermal fuse (13) is located between the first end and the second end of the first conducting element (11). The thermal fuse is configured for thermally blowing to open the electric circuit (7) by exposure to a high temperature, after the first conducting element (11) contacted the air-slag interface (2as),

### THERMAL FUSE (13)

The thermal fuse (13) is configured for thermally blowing to open the electric circuit (7) after the first conducting element (11) contacted the air-slag interface (2as). Preferably, the measuring unit (6) is configured such that the electric circuit (7) remains permanently open once the thermal fuse (13) has blown and the measuring unit (6) is in contact with the molten metal (3).

Various parameters must be controlled to establish the time and position along the vertical axis (Z) for the thermal fuse to blow after the first conducting element (11) had contacted the slag layer (2). It is essential that the thermal fuse does not blow before the position of the air-slag interface (2as) was determined by the electric circuit (7) as discussed supra. The thermal fuse must blow before the slag-metal interface detection unit (8) reaches the slag-metal interface (2sm) as the lance is driven out of the vessel. These two events define the time window for the thermal fuse to blow. The time window can easily be converted into a corresponding position window. The position window is defined between the positions of the measuring lance when,
- The contact sensor (14) or the second end of the first conducting element (11) contacts the air-slag interface (2as) and
- the slag-metal interface detection unit (8) is downstream and at the level of the slag-metal interface (2sm), i.e., in the metal melt (3) as the measuring lance is driven out of the vessel.

The thermal fuse will blow when it reaches a predefined blowing temperature. The moment in time and position the thermal fuse will blow therefore depends on the type of thermal fuse used. It also depends on the temperature of the outer environment surrounding it, including the slag layer and molten metal temperatures. Finally, it depends on the heat transfer rate from the outer environment to the thermal fuse. This can vary substantially if the thermal fuse is enclosed in a housing, reducing the heat transfer rate depending on the insulation properties of the housing.

The thermal fuse (13) may be located in a recess or on an external surface of the measuring unit (6). Preferably, the thermal fuse (13) is entirely embodied or incorporated in a housing attached to or forming an integral part of the measuring unit (6), and whose walls are made of a material forming a thermal insulation between inside and outside the housing. The wall material can be e.g., cardboard or a refractory material. The wall material is configured for thermally shielding the thermal fuse (13) from the high temperatures of the slag layer and molten metal. A rise in a temperature of the fuse (13) caused by heat transferred from the slag layer (2) or molten metal (3) to the fuse (13) when plunging the measuring unit (6) through the slag layer (2) or molten metal (3), can thus be retarded by the thermal insulating effect of the housing walls. For a given type of thermal fuse, blowing at a predefined temperature, the type and thickness of the wall material shielding the fuse (13) can be adapted by a designer to ensure that the thermal fuse will reach the predefined temperature and blow within the time window or position window defined supra, i.e., between the moment the air-slag interface was detected and the moment the slag-metal interface detection unit (8) reaches the slag-metal interface (2sm) as the measuring lance is being driven out of the vessel.

The displacement rate of the measuring lance must be adapted to the heat exchange rate between the outer environment and the thermal fuse to ensure that the thermal fuse blows within the time and position windows. Additionally, if the housing is destroyed as the thermal fuse is in the slag layer or in the metal melt, the temperature of the thermal fuse would rise almost instantly and blow. So the position window can also be determined by the degradation temperature of the housing. A skilled person can easily optimize these parameters, viz., heat exchange rate, displacement rate, and housing degradation temperature to ensure that the thermal fuse reaches the predefined blowing temperature within the time and position windows.

Preferably, the thermal fuse (13) is configured for thermally blowing upon reaching a temperature comprised between 100°C and a temperature of 5°C below a maximum of the temperature of the slag layer (2) or molten metal (3), and preferably above 150°C. The thermal fuse is preferably enclosed in a housing thermally insulating it from the outer environment to reduce the heat exchange rate between the outer environment and the thermal fuse.

### ELECTRICAL TERMINALS (8ta, 8tb, 9ta, 9tb)

As represented in Figure 1-4, the first and second electric measuring terminals (8ta, 8tb) are configured for electrically connecting the slag-metal interface detection unit (8) to an analysis device (16). This connection preferably runs via slag-metal interface detection unit conducting lines passing through the carrier tube (5) and preferably extending all along a lumen of the hollow carrier tube (5), between the proximal and distal ends (5p, 5d) thereof. There are two slag-metal interface detection unit conducting lines. The analysis device (16) is configured for measuring or detecting one or more electrical parameters between the first and second electric measuring terminals (8ta, 8tb), wherein the one or more electrical parameters are preferably selected among a voltage amplitude, a current amplitude, an electrical resistance, and a short circuit. The electrical parameter measured by the analysis device (16) between the first and second electric measuring terminals (8ta, 8tb) is useful to the present invention for determining the position of the slag-metal interface (2sm).

As represented in Figure 3-4, the first and second electric sensor terminals (9ta, 9tb) are configured for electrically connecting the sensor unit (9) to a second analysis device (16). In Figures 3 and 4, the first and second analysis devices (16) are represented as a single device. This is a preferred embodiment. In other Figures, the first and second analysis devices are represented separately to distinguish in the discussion between the connections thereof to the electric measuring terminals (8ta, 8tb) from the electric sensor terminals (9ta, 9tb).

This connection preferably runs via sensor unit conducting lines passing through the carrier tube (5) and preferably extending all along the lumen of the hollow carrier tube (5), between the proximal and distal ends (5p, 5d) thereof. There are two sensor unit conducting lines. The second analysis device (16) is configured for measuring or detecting one or more electrical parameters between the first and second electric sensor terminals (9ta, 9tb) representative of a property of the slag and metal melt, such as for example the temperature. The one or more electrical parameters are preferably selected among a voltage amplitude, a current amplitude, an electrical resistance, and a short circuit. The first and second analysis devices can be separate or belong to a same analysis device as shown in Figures 3 and 4.

As represented in Figure 5-6, when the measuring lance comprises a sensor unit (9), it is preferred that the slag-metal interface detection unit (8) and the sensor unit(9) share at least one conducting line for connecting to the first and second analysis devices, to reduce the number of conducting lines to be connected to the analysis device (16) to connect to all units. For example, one of the first or second electric measuring terminals (8ta, 8tb) can be electrically connected to and sharing a same potential with one of the first or second electric sensor terminals (9ta, 9tb).

### SENSOR UNIT (9)

As represented in Figure 7, the sensor unit (9) of the measuring lance (1) preferably is a thermocouple (15) and the second material property measured by the sensor unit (9) is a temperature. The first and second electric sensor terminals (9ta, 9tb) are configured for electrically connecting to the second analysis device (16) which is configured for measuring electrical parameters comprising at least a voltage or a current between the first and second electric sensor terminals (9ta, 9tb). Preferably, the analysis device (16) is configured for calculating a numerical value of the temperature, for example in Celsius or Kelvin degrees, based on the electric signal (e.g., voltage) measured between the first and second electric sensor terminals (9ta, 9tb). Preferably, the analysis device (16) is configured for displaying the numeric value of the temperature to a user.

Preferably, the cap (10) is enclosing the thermocouple (15) and is configured for degrading to expose the thermocouple (15) to a surrounding environment of the measuring head (6) upon exposure of the cap (10) to a predefined temperature for a predefined exposure time, such that the thermocouple (15) can be in contact with and measure a temperature in the surrounding environment being the atmosphere (4), the molten metal (3) or the slag (2), for example.

The thermocouple (15) can be a metal thermocouple or a ceramic thermocouple. The sensor unit (9) can also comprise or be a thermistor, and the second material property measured by the sensor unit (9) is a temperature, and the second analysis device (16) is preferably configured for measuring electrical parameters comprising at least an electrical resistance.

### OXYGEN PROBE (8o)

Beside measuring the oxygen concentrations in the slag layer (2) and in the molten metal (3) (a critical property to ensure the quality of the cast), the sole function of the slag-metal interface detection unit (8) according to the present invention is to detect the position of the slag-metal interface (2sm), since the position of the air-slag interface was detected by the electric circuit (7) as discussed supra. In a preferred embodiment of the measuring lance (1) according to the invention, the slag-metal interface detection unit (8) comprises an oxygen probe (8o) for measuring a concentration of oxygen. As represented in Figures 7-8, the oxygen probe (8o) comprises an oxygen cell (8c), preferably a zirconia cell, connected to the first electric measuring terminal (8ta) and a reference electrode (8r) connected to the second electric measuring terminal (8tb). The cap (10) enclosing the oxygen probe (8o) is configured for degrading to expose the oxygen probe (8o) to the surrounding environment of the measuring head (6) upon exposure to a predefined temperature for a predefined exposure time. The predefined temperature for degrading the cap (10) is preferably comprised between 1350°C and 1500°C, preferably between 1400°C and 1450°C, and the predefined exposure time for degrading the cap (10) is preferably comprised between 1.0 and 3.0 seconds, between 1.5 and 2.0 seconds. As explained below, the cap (10) is designed and dimensioned such as to degrade not before it reaches the molten metal (3) downstream of the slag layer (2) to first expose the oxygen probe (8o) to the molten metal before the oxygen probe contacts the slag layer (2) upon driving the measuring lance out of the vessel. As the oxygen probe (8o) is exposed to the molten metal (3), it can start measuring the oxygen concentration in the molten metal. The measuring lance can be driven out of the vessel and as the oxygen probe (8o) reaches the slag-metal interface (2sm) it will measure a sudden change in the oxygen concentration thus measured. As the measuring lance keeps moving out of the vessel, the oxygen probe (8o) crosses through the slag layer with impurities clinging to its surface, until it reaches the air-slag interface (2as) where it should theoretically measure a second sudden change in the oxygen concentration thus measured, as in prior art measuring lances equipped with an oxygen probe (8o). Because of the impurities clinging to its surface, however, the oxygen probe (8o) is polluted and does not measure immediately a change in oxygen concentration. The advantage of the present invention over prior art measuring lances, is that the position of the air-slag interface (2as) does not rely on the oxygen probe (8o), which is unreliable for the foregoing reasons, but was already determined with great accuracy with the electric circuit (7) as explained supra.

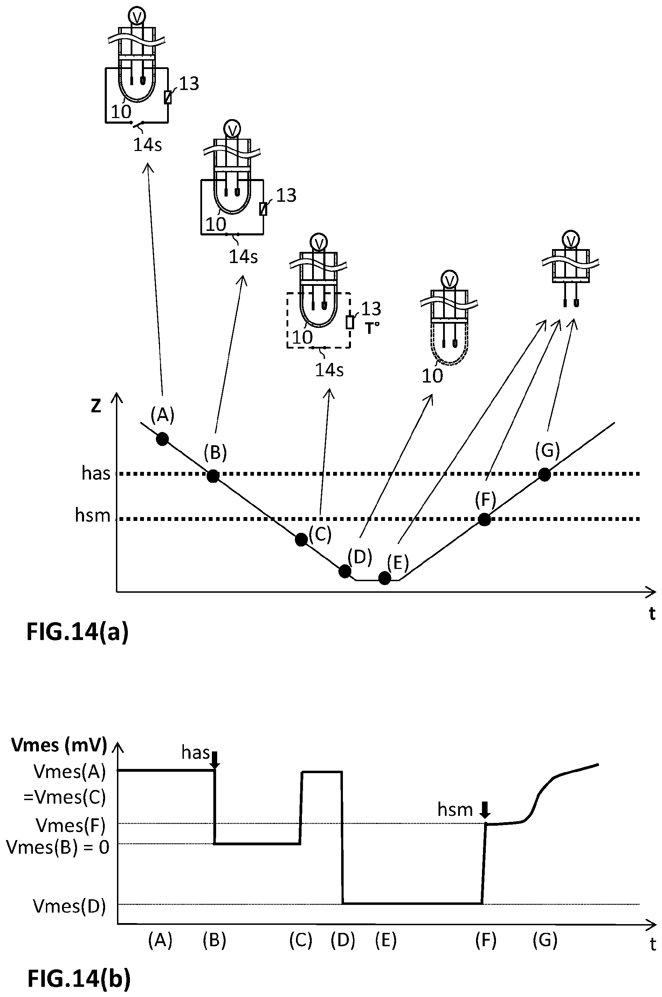

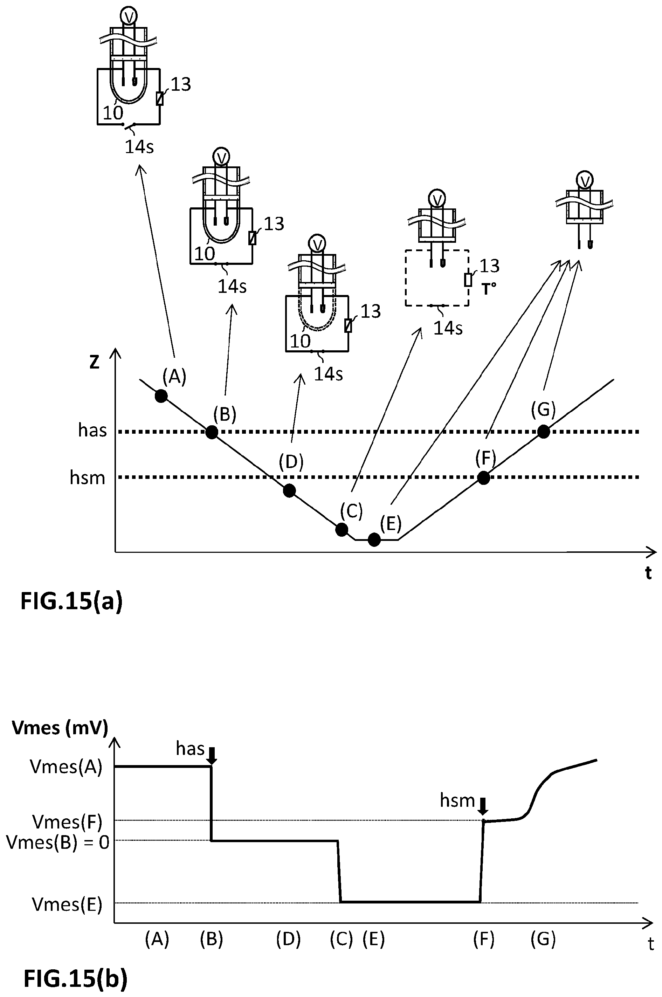

As shown in Figures 14 and 15, in the measuring lance (1) comprising the oxygen probe (8o), the thermal fuse (13) can be configured for thermally blowing,
- before the cap (10) is degraded to expose the oxygen probe (8o) and optionally the sensor unit (9) to the surrounding environment (cf. Figures 14(a) and 14(b)), or
- only after the cap (10) was degraded. Since this must happen when the cap is immersed in the molten metal, it is important that the thermal fuse blows rapidly thereafter to open the electric circuit (7), so that the analysing unit can start measuring an oxygen concentration.

### INDUCTION COIL (8i)

As an alternative to the oxygen probe (8o), the slag-metal interface detection unit (8) of the measuring lance (1) can comprise an induction coil (8i) for detecting a change in magnetic permeability of the surrounding environment, as illustrated in Figures 9-10. The cap (10) enclosing the induction coil (8i) is configured for separating the induction coil (8i) from the outer environment outside the cap (10) and must not degrade during the measurement operation upon exposure to the temperatures of the molten metal (3) and of the slag (2), and for not degrading upon passing through the slag layer (2).

### ELECTRIC CIRCUIT (7) COMPRISING A CONTACT SENSOR (14)

In one embodiment, the electric circuit (7) comprises first and second conductive elements (11, 12) together with a contact sensor (14). As represented in Figures 2, 4, 5; 7, 8, 11, and 12, the sensor (14) is coupled to the second ends of both first and second conducting elements (11, 12). To maintain the total number of electrical terminals to be connected to the analysis device (16) the same as in prior art measuring lances devoid of an electric circuit (7), the first and second conductive elements (11, 12) can be conductively coupled according to any one combination of the following embodiments,
- the first end of the first conducting element (11) is conductively coupled,
   ∘ to the first electric measuring terminal (8ta) (cf. Figure 1), or
   ∘ to the first electric sensor terminal (9ta) (cf. Figure 4),
   and
- the first end of the second conducting element (12) is conductively coupled,
   ∘ to the second electric measuring terminal (8tb) (cf. Figure 1), or
   ∘ to the second electric sensor terminal (9tb) (cf. Figure 4).

Connection of the first ends of either of the first and second conductive elements (11, 12) to the first or second electric sensor terminal (9ta, 9tb) is of course only possible if the measuring lance comprises a sensor unit (9). Absent a sensor unit (9), the first ends of both first and second conductive elements (11, 12) must be connected to the first and second electric measuring terminals (8ta, 8tb), respectively.

The contact sensor (14) is preferably located downstream of the cap (10). Preferably, the contact sensor (14) is a most downstream part of the measuring lance (1). This way, the sensor is the first component of the measuring lance contacting and disrupting the air-slag interface as the lance is dipped into the vessel, allowing for a more accurate measurement than if the sensor reached the air-slag interface after another portion of the measuring lance had already contacted and disrupted the interface.

In one embodiment, the contact sensor (14) is a mechanical switch (14s), biased in an open position wherein the first and second conducting elements (11, 12) are non-conductively separated i.e., are separated and not in electrical contact. The mechanical switch (14s) is configured to move into a closed position upon application of a mechanical force corresponding to a force generated upon contacting the mechanical switch (14s) with the air-slag interface (2as), to conductively connect the first and second conducting elements (11, 12). The thermal fuse (13) is configured for thermally blowing once or after the mechanical switch (14s) moved from the open to the closed position.

The first and second conductive elements (11, 12) can each independently from one another be formed by a conductive cable or wire, or by a conductive portion of any component of the measuring unit. For example, as represented in Figures 11 and 12, the second conductive element (12) can be a portion of the cap (10), such as a conductive strip made of a conductive material, or the whole cap (10) can be conductive and thus form the second conductive element (12). The cap or conductive strip thereof must be electrically coupled to the second electric measuring or sensor terminal (8tb, 9tb). In these configurations, the mechanical switch (14s) can comprise,
- a first member (14a) conductively connected to or forming an integral part of the second end of the first conducting element (11), and
- a second member (14b) solidly attached to or forming an integral part of the cap (10) or the conductive strip thereof.

The first member (14a) is resiliently separated from the second member (14b). The resiliency can be achieved through the elastic properties of the first conductive element (11) or by means of a resilient member (17), such as a spring which, as illustrated in Figures 11 and 12 can be (non-conductively) attached to the cap (10). As represented in Figures 11 and 12, the resilient member (17) is biased for naturally separating the first member (14a) from the second member (14b) and is configured for deforming upon application of the mechanical force corresponding to the force generated upon contacting the mechanical switch (14s) with the air-slag interface (2as), to conductively connect the first and second members (14a, 14b). In other words, the resilient member (17) is naturally biased for positioning the first and second members (14a, 14b) such that there is no electrical contact between the first and second members (14a, 14b), and is configured for deforming upon application of the mechanical force to allow the electrical contact between the first and second members (14a, 14b) to occur thus creating a short-circuit, immediately identified by the analysis device (16).

As an alternative to the mechanical switch (14s), the contact sensor (14) can be a piezoelectric detector (14p) configured for generating an electrical current upon application of a mechanical force corresponding to a force generated upon contacting the piezoelectric detector (14p) with the air-slag interface (2as). The thermal fuse (13) is configured for thermally blowing once or after the piezoelectric detector (14p) has generated the electrical current.

In the embodiment of the measuring lance (1) comprising the contact sensor (14) and the sensor unit (9), it is preferred, as illustrated in Figures 8, 11, and 12, that the first end of the first conducting element (11) is electrically connected to both first electric measuring terminal (8ta) and first electric sensor terminal (9ta). Alternatively, the second conducting element (12) is electrically connected to both second electric measuring terminal (8tb) and second electric sensor terminal (9tb) (not shown).

### ELECTRIC CIRCUIT (7) WITH A SINGLE FIRST CONDUCTIVE ELEMENT (11)

Alternatively, as illustrated in Figures 1, 3, 6, 9, 10, the electric circuit (7) comprises no second conducting element (12) and no contact sensor (14). The second end of the first conducting element (11) which is arranged outside and preferably downstream of the cap (10) comprises an electrical contact tip pointing downstream. Preferably, the electrical contact tip is a most downstream portion of the measuring unit (6). As illustrated in Figure 1, if the first end of the first conducting element (11) is electrically connected to the first electric measuring terminal (8ta), then the second electric measuring terminal (8tb) is connected to a ground potential. In this embodiment, the slag layer which must be conductive is electrically grounded to the same earth as the second electric measuring terminal (8tb). As illustrated in Figure 3, if the first end of the first conducting element (11) is electrically connected to the first electric sensor terminal (9ta), then the second electric sensor terminal (9tb) is connected to a ground potential.

Since both slag layer (2) and second electric measuring or sensor terminal (8tb, 9tb) are grounded to the same earth, as soon as the electrical contact tip of the second end of the first conductive element (11) contacts the air-slag interface (2as), the first conductive element (11) is grounded to the earth too and is short circuited. The analysis device can detect no potential difference between first and second electric measuring terminals (8ta, 8tb), which is indicative of the position of the air-slag interface (2as).

### CAP (10)

The cap (10) protects the slag-metal interface detection unit (8) and optionally the sensor unit (9) from contact with the slag layer (2) and molten metal (3) as the measuring lance is dipped into the vessel. If the slag-metal interface detection unit (8) comprises an induction coil (8i) the cap (10) must resist during the whole duration of the measuring operation to enclose the slag-metal interface detection unit (8) and protect it from contact with the slag and metal. If the slag-metal interface detection unit (8) comprises an oxygen probe (8o) which must be in contact with the medium whose O₂ concentration it measures, the cap must degrade not before it is immerged in the molten metal (3), downstream of the slag-metal interface (2sm). Once in the molten metal, the cap (10) preferably degrades rapidly to shorten the measuring operation. It is important that the cap (10) does not degrade when it is still in the slag layer (2), as the oxygen probe (8o) would be exposed to the slag and impurities would cling to its surface and pollute the measurement. The cap (10) can be configured for degrading chemically by contact with the slag. The cap (10) is, however, preferably degraded thermally as it is driven through the slag layer (2) and into the molten metal (3), to expose the oxygen probe (8o) to the molten metal (3).

Depending on the requirements thereof (oxygen probe (8o) or induction coil (8i)), and on the temperatures of the slag layer and molten metal, the cap (10) can be made of metal, cardboard, or combinations thereof. In an embodiment, a portion of an external surface (10s) of the cap (10) is conductive and is comprised in one of the first or second conducting elements (11, 12), preferably in the second conducting element (12). Preferably, the cap (10) configured for use with molten steel and can be made of steel having a melting point comprised between 1520°C and 1540°C.

### METHOD

The invention also concerns a method for determining in a metallurgic container a position (has) of an air-slag interface (2as) between an atmosphere (4) and a slag layer (2) sitting on top of a molten metal (3), and a position (hsm) of a slag-metal interface (2sm) between the slag layer (2) and the molten metal (3). The method comprises:
- position a measuring lance (1) according to the invention entirely in the atmosphere (4) above the air-slag interface (2as) and with the measuring unit (6), and preferably the second end of the first conducting element (11), positioned closest to the air-slag interface (2as),
- start measuring, and preferably recording, a vertical position of the measuring lance (1) along a vertical axis (Z) substantially normal to the air-slag interface (2as),
- starting measuring, and preferably recording, values of a first material property with the slag-metal interface detection unit (8),
- start measuring an electrical property of the first conducting element (11), and preferably detecting a short circuit between the first conducting element (11) and a ground potential,
- translate the measuring lance (1) along at least a vertical component parallel to the vertical axis (Z) and downwards i.e., towards the air-slag interface (2as),
- upon detection of a gradient in the electrical property of the first conducting element (11) indicative that the second end of the first conducting element (11) has contacted the air-slag interface (2as), recording the vertical position of the measuring lance (1) as the position (has) of the air-slag interface (2as),
- keep translating downwards the measuring lance (1) along at least the vertical component up to reaching the slag-metal interface (2sm) and contacting the molten metal (3) with the measuring unit (6),
- allow the thermal fuse (13) to blow and thus conductively separate and electrically isolate the first end from the second end of the first conducting element (11),
- measure the values of the first material property with the slag-metal interface detection unit (8) and maintain the measuring unit (6) in the molten metal (3) until the measured values of the first material property become substantially constant, representative of the value of the first material property of the molten metal (e.g., until the value varies by not more than 10%, preferably not more than 5%),
- translate the slag-metal interface detection unit (8), preferably the oxygen probe (8o), along the vertical component upwards i.e., towards the slag-metal interface (2sm),
- upon detection of a sharp variation of the values of the first material property measured with the slag-metal interface detection unit (8), from the value representative of the first material property of the molten metal to the one of the slag, recording the vertical position of the measuring lance (1) as the position (hsm) of the slag-metal interface (2sm),
- keep translating upwards the measuring lance (1) along the vertical component until an entirety of the measuring lance (1) is in the atmosphere (4).

Preferably, in the method according to the invention, the slag-metal interface detection unit (8) of the measuring lance (1) is an oxygen probe (8o) for measuring a concentration of oxygen. It is preferred that the measuring lance (1) comprises:
- a sensor unit (9) consisting of a thermocouple (15) for measuring values of a temperature of a surrounding environment, and
- preferably an intelligence for correcting the concentration of oxygen measured by the oxygen probe (8o) as a function of the temperature measured by the thermocouple (15).

### OPERATING PRINCIPLE - FIGURES 14 AND 15

Figure 13 to 15 illustrate various stages of the method of measuring the position and thickness of the slag layer (2) with the measuring lance (1) according to the invention. The measuring lance (1) according to the invention is configured for measuring the position (has) of the air-slag interface (2as) and the position (hsm) of the slag-metal interface (2sm) in a single measurement run consisting of a cycle of,
- driving the measurement lance down along the vertical axis (Z), into the vessel with the measuring unit moving from the atmosphere (4), through the slag layer (2) and reaching the molten metal (3) (cf. stages (A), (B) to (E) in Figures 13, 14(a), and 15(a)), followed by
- driving the measurement lance up along the vertical axis (Z), out of the vessel with the measuring unit moving from the molten metal (3), through the slag layer (2) and reaching the atmosphere (4) (cf. stages (E) to (F) in Figures 13, 14(a), and 15(a)).

In other words, a single downward penetration of the measuring unit (6) from the atmosphere (4) above the slag layer (2) to the molten metal (3) followed by a single upward extraction of the measuring unit (6) from the molten metal (3) to the atmosphere (4) is sufficient for measuring the thickness and position of the slag layer (2). Fig. 13 represents a vertically oriented measuring lance (1), wherein the carrier axis (X) extending between the proximal end (5p) and the distal end (5d) of the carrier tube (5) is thus kept parallel to the vertical axis Z of the tundish (22) during the whole measurement cycle. In other implementations of the method according to the invention, the measuring lance (1) can however be tilted at an angle such that the carrier axis (X) extends along an oblique axis, which is not parallel to the vertical axis Z of the metallurgical vessel thus. Such configuration is of particular interest for some types of metallurgical vessels wherein in order to access the surface of the liquid metal, the measuring lance (1) can or needs to be inserted in the metallurgical vessel through a passage extending along a non-vertical axis. This is typically the case of an EAF (electric arc furnace) wherein the measuring lance needs usually to be inserted into the liquid metal through the slag door opening, which is located on the sidewall of the EAF and extends along a non-vertical slag door opening axis. Insertion of the measuring lance (1) through that slag door opening is therefore advantageously carried out with the measuring lance (1) tilted to an oblique angle such that the carrier axis (X) is substantially parallel to the slag door opening axis. Then, during the measurement cycle, the measuring lance (1) is advantageously driven along the slag door opening axis into and out of the metallurgical vessel. When such oblique translation of the measuring lance (1) is carried out, the method according to the invention can still be implemented by only recording the vertical position of the measuring lance (1) at the air-slag interface (2as) and at the slag-metal interface (2am). Alternatively, the oblique position of the measuring lance (1) along the slag door opening axis can be recorded at the air-slag interface (2as) and at the slag-metal interface (2am). In that case, the respective vertical positions of those interfaces (2as, 2am) can be determined from their oblique positions by using the appropriate trigonometric identity relating a position along the slag door opening axis to its projection along the vertical axis.

Figures 14(a)&14(b) and 15(a)&15(b) illustrate the various stages with a measuring unit characterized by a slag-metal interface detection unit (8) comprising an oxygen probe (8o), and an electric circuit (7) comprising first and second conducting elements (11, 12) coupled to a mechanical switch (14s). Unless otherwise indicated, the discussion made with respect to the embodiments illustrated in Figures 14(a)&14(b) and 15(a)&15(b) apply to the invention in general, i.e., to any embodiment falling within the scope of the claimed invention.

The embodiment illustrated in Figures 14(a) differs from the embodiment illustrated in Figure 15(a), in that
- In Figure 14(a), the thermal fuse (13) is configured for blowing **before** the cap (10) is sufficiently degraded to expose the slag-metal interface detection unit (8) to the molten metal (3). This embodiment is referred to as the first embodiment-14 (in reference to Figure 14).
- In Figure 15(a), the thermal fuse (13) is configured for blowing **after** the cap (10) is sufficiently degraded to expose the slag-metal interface detection unit (8) to the molten metal (3). This embodiment is referred to as the second embodiment-15 (in reference to Figure 15). Since the cap (10) must not degrade before the slag-metal interface detection unit (8) has reached the level of the molten metal, to reduce the measuring operation time, it is preferred that the thermal fuse (13) blows as soon as possible after the cap was degraded.

In continuation, the following nomenclature of the electric circuit configurations is used.
- **Sensor-configuration** = measuring head comprising an electric circuit (7) comprising first and second conducting elements (11, 12) coupled to a contact sensor (14). The sensor-configuration can be one of the following,
   ∘ **Switch configuration** = measuring head comprising an electric circuit (7) comprising first and second conducting elements (11, 12) coupled to a mechanical switch (14s).
   ∘ **Piezo configuration** = measuring head comprising an electric circuit (7) comprising first and second conducting elements (11, 12) coupled to a piezoelectric detector (14p).
- **Grounded-configuration** = measuring head comprising an electric circuit (7) comprising first conducting element (11) only, with the slag and second electric measuring terminal (8tb) being grounded to the earth.

The following nomenclature of the slag-metal interface detection unit configurations is used.
- **Oxygen-configuration** = slag-metal interface detection unit (8) comprises an oxygen probe (8o).
- **Induction-configuration** = slag-metal interface detection unit (8) comprises an inductive coil (8i).

Furthermore, as defined supra, the following nomenclature is also used:
- **First embodiment-14** = thermal fuse blows before the cap degrades as illustrated in Figure 14,
- **Second embodiment-15** = thermal fuse blows after the cap degrades as illustrated in Figure 15.

For sake of clarity, the following conditions are established in the discussion below. The skilled person can easily generalize to any alternative configuration.
- the first conducting element (11) is conductively coupled to the first electric measuring terminal (8ta) and for the sensor-configuration, the second conducting element (12) is conductively coupled to the second electric measuring terminal (8tb). The skilled person can generalize to the case wherein any of the first and second conductive elements (11, 12) being coupled to any one of the first and second electric sensor terminals (9ta, 9tb).
- The analysis device (16) measures a voltage difference between the first and second electric measuring terminals (8ta, 8tb). The same conclusions on the operating principle apply mutatis mutandis in case the analysis device (16) measures another electrical parameter, such as an intensity.

### OPERATING PRINCIPLE (A)

At an initial time (A) of the measuring process represented in Figures 13, 14(a) and 15(a), the measuring lance (1) according to the invention, including the measuring unit (6), is positioned entirely in the atmosphere (4) above the air-slag interface (2as). The cap (10) is unscathed, and the electric circuit (7) is in the first electrical configuration with the thermal fuse (13) unblown. At the initial time (A), both first embodiment-14 and second embodiment-15 are identical.

The sensor (14) for the sensor-configuration, and the second end of the first conducting element (11) for the grounded-configuration, are preferably positioned closest to the air-slag interface (2as), because if any other component of the measuring lance were to reach the air-slag interface first, the latter could be disrupted and agitated when the electric circuit (7) reaches it, thus reducing the accuracy of the measurement.

The initial vertical position of the measuring lance (1) along the vertical axis (Z) is measured and recorded. Since the electric circuit (7) is conductively coupled to the first and second electric measuring terminals (8ta, 8tb), the electrical signal measured by the analysis device (16) depends on the values measured by the slag-metal interface detection unit (8) and on the electric circuit (7). At the initial time (A) the analysis device (16) measures a voltage difference Vmes(A), whose value depends on the slag-metal interface detection unit (8) and on the first electrical configuration of the electric circuit (7) as follows.

The slag-metal interface detection unit (8) measures the following properties,
- Oxygen-configuration: The oxygen probe (8o) measures a voltage difference V8(A) between the oxygen cell (8c) and the reference cell (8r) representative of the oxygen concentration inside the cap (10) it is enclosed in.
- Induction-configuration: The induction coil (8i) measures a magnetic permeability of the atmosphere (4) surrounding the cap (10).

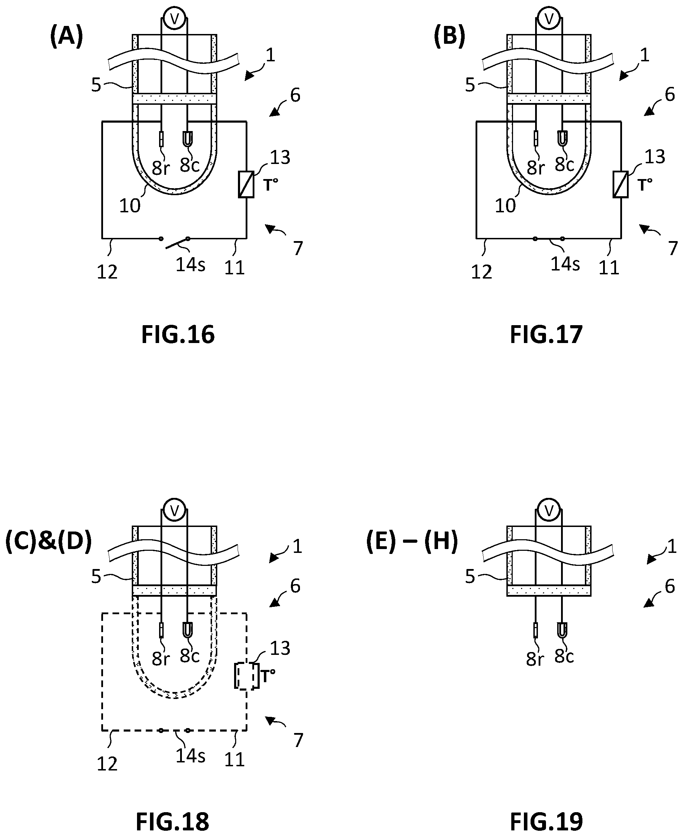

The electric circuit (7) is in the first electrical configuration. The voltage difference Vmes(A) measured by the analysis device (16) depends on the configuration of the electric circuit (7).
- Switch-configuration: the electric circuit is open as illustrated in Figure 16, so that the analysis device measures the voltage difference Vmes(A) = V8(A) ≠ 0 (V), wherein V8(A) is the voltage difference measured by the slag-metal interface detection unit (8 at the initial time (A), which is representative of the concentration of oxygen in the cap (10) (cf. Figures 14(b) and 15(b) at time (A)). If the electric circuit is connected to the first and second electric sensor terminals (9ta, 9tb) instead, the measure voltage Vmes(A) is of course representative of the parameter measured by the sensor unit (9), such as a temperature if the sensor unit is a thermocouple.
- Piezo-configuration: the piezoelectric detector (14p) is at a rest voltage (V14p0). The analysis device measures a voltage difference which is a function of the property measured by the slag-metal interface detection unit (8) and by the rest voltage, i.e., Vmes(A) = f(V8(A), V14p0) ≠ 0 (V).
- Grounded-configuration: the electric circuit is open, so that the analysis device measures the property measured by the slag-metal interface detection unit (8). Like for the switch-configuration, the analysis device measures the voltage difference Vmes(A) ≠ 0 (V) which is representative of the concentration of oxygen in the cap (10).

### OPERATING PRINCIPLE (B)

Following a downward translation of the measuring lance (1) towards the air-slag interface (2as) along the vertical component parallel to the vertical axis (Z), until the contact sensor (14) or the second end of the first conductive element (11) of the electric circuit (7) contacts the air-slag interface (2as) at a time (B), as represented in Figures 13, 14(a), and 14(b). At the time (B), both first embodiment-14 and second embodiment-15 are identical.

The slag-metal interface detection unit (8) measures the following properties,
- Oxygen-configuration: Since the cap is still unscathed at time (B) as illustrated in Figure 17, the slag-metal interface detection unit (8) measures the same voltage difference as at the initial time (A), i.e., the voltage difference, V8(B) = V8(A), which is representative of the oxygen concentration inside the cap (10) it is enclosed in.
- Induction-configuration: The induction coil (8i) measures a magnetic permeability of the medium surrounding the cap (10). If the contact sensor (14) or the second end of the first conductive element (11) of the electric circuit (7) is first to contact the air-slag interface (2as), then the induction coil (8i) is still surrounded by the atmosphere (4) and the magnetic permeability is measured as at the initial time (A). If, on the other hand, the slag-metal interface detection unit (8) is already in the slag layer (2) when the electric circuit (7) reaches the air-slag interface (2as), then the induction coil (8i) measures the magnetic permeability of the slag layer (2).

The electric circuit (7) changes from the first electrical configuration of the initial time (A) to the second electrical configuration at time (B). The change of first to second electrical configuration triggers a jump of the voltage difference, ΔVmes = Vmes(B) - Vmes(A), measured by the analysis device (16) which instantly identifies the position of the air-slag interface (2as) along the vertical axis (Z). The voltage difference Vmes(B) measured by the analysis device (16) depends on the configuration of the electric circuit (7).
- Switch-configuration: The mechanical switch (14s) is closed by the force applied thereon by the measuring lance pressing against the air-slag interface (2as). The electric circuit is therefore closed and short-circuited, so that the analysis device measures a zero- voltage between first and second electric measuring terminals, i.e., Vmes(B) = 0 (V), regardless of the value of the voltage difference V8(B) measured by the slag-metal interface detection unit (8) at time (B). (cf. Figures 14(b) and 15(b) at time (B)). The same happens if the electric circuit is connected to the first and second electric sensor terminals (9ta, 9tb) instead.
- Piezo-configuration: the piezoelectric detector (14p) is at a stressed voltage (V14p1). The analysis device measures a voltage difference which is a function of the property measured by the slag-metal interface detection unit (8) and by the stressed voltage, i.e., Vmes(B) = f(V8(B), V14p1) ≠ Vmes(A).
- Grounded-configuration: as the second end of the first conducting element (11) contacts the air-slag interface (2as) which is grounded to the earth, it becomes grounded to the earth too. Since the second electric measuring terminal (8tb) is also grounded to the earth, the electric circuit is short-circuited, so that the analysis device can measure a zero- voltage between first and second electric measuring terminals, i.e., Vmes(B) = 0 (V), regardless of the value of the voltage difference V8(B) measured by the slag-metal interface detection unit (8) at time (B).

At time (B) the measuring lance (1) successfully measured the position of the air-slag interface with great accuracy.

### OPERATING PRINCIPLE (C, D)

After having contacted the air-slag interface (2as) with the electric circuit (7) of the measuring unit (6), the measuring lance (1) keeps moving downwards along the vertical component parallel to the vertical axis (Z), and the measuring unit (6) including the cap (10) is driven through the slag layer (2) and into the molten metal (3), as represented by the position (E) in Figure 13, and positions (C), (D), (E) in Figures 14(a), and 15(a). For example, a time required by the slag-metal interface detection unit (8) to move through the slag layer (2) i.e., from position (A) or (B) to a position (C), (D), or (E) can be comprised between 0.5 and 1 s.

The second electrical configuration the electric circuit (7) passed into as it contacted the air-slag interface (2as) allowed the position of the air-slag interface (2as) to be accurately identified, but it also masked any sensible reading of the measurements of the slag-metal interface detection unit (8). Indeed, the first and second electric measuring terminals (8ta, 8tb) are short-circuited in both switch- and grounded-configurations, and the stressed voltage V14p1 measured by the piezoelectric detector in the piezo-configuration varies with penetration depth and density of the medium through which it travels, as explained supra with reference to time (B).

For the analysis device (16) to make a sensible reading of the measurements made by the slag-metal interface detection unit (8), the electric circuit (7) must be neutralized. This is achieved by blowing the thermal fuse (13) to open the electric circuit.

As an oxygen probe (8o) must be in contact with the medium it measures the oxygen concentration from, the cap must also be removed or degraded for the analysis device (16) to make a sensible reading of the measurements made by the slag-metal interface detection unit (8). This is illustrated in Figure 18 wherein the fuse is blown and the cap is degraded. This is not necessary for the induction-configuration as the induction coil (8i) needs not being in direct contact with the medium to measure the magnetic permeability thereof.

These two operations, viz., blowing the thermal fuse to neutralize the electric circuit (7), and degrading the cap to expose the oxygen probe (8o) are carried out at times (C) and (D), respectively as illustrated in Figures 14(a) and 15(a). It can be seen that the sequence of these two operations is inverted between the first embodiment-14 and the second embodiment-15, which are discussed separately.

### Operating Principle (C, D) - First Embodiment-14, Sequence (C) - (D)

As shown in Figure 14(a), in the first embodiment-14, the thermal fuse is blown at time (C) before the cap (10) is degraded at time (D).

### Time (C)

The high temperature of the slag layer (2) and of the molten metal (3) in contact with the measuring unit (6) causes the thermal fuse (13) to thermally blow and open the electric circuit (7) at time (C). As a consequence, the first and second ends of the first conducting element (11) are electrically isolated from each other and no current can pass through the electric circuit anymore. The electric circuit (7) is said to be neutralized at that point, because it ceases to influence the voltage difference Vmes(C) measured by the analysis device (16) between the first and second electric measuring terminals (8ta, 8tb).

. The thermal fuse (13) may blow any time after the position of the air-slag interface was identified at time (B). The thermal fuse (13) must blow before the slag-metal interface detection unit (8) reaches the slag-metal interface (2sm) as the measuring lance is driven up and out of the vessel at time (F) in Figure 14(a).

The thermal fuse (13) blows as the temperature rises and reaches the blowing temperature when the measuring unit is in contact with the slag layer (2) and/or with the molten metal (3). As discussed supra, the time and position the thermal fuse (13) blows at after having contacted the air-slag interface (2as) as the measuring head is driven down through the slag layer (2) and into the molten metal (3), can be controlled by selecting a type of fuse, a downward translation speed of the measuring lance, and a heat exchange rate through a housing enclosing the thermal fuse (13).

As the thermal fuse blew, the electric circuit is neutralized and the analysis device (16) can measure the voltage difference, V8(C), measured by the slag-metal interface detection unit (8). This is valid for all configurations of the electric circuit (7).
- Oxygen-configuration: Since the cap is still unscathed at time (C), the slag-metal interface detection unit (8) measures the same voltage difference as at times (A), i.e., the voltage difference, V8(C) = V8(A), which is representative of the oxygen concentration inside the cap (10) it is enclosed in. Consequently, with the electric circuit neutralized, the analysis device measures a voltage difference, Vmes(C) = V8(C) = Vmes(A), as shown in Figure 14(b) at time (C).
- Induction-configuration: The induction coil (8i) measures a magnetic permeability of the medium surrounding the cap (10). As the electric circuit is neutralized, the analysis device (16) measures a voltage difference Vmes(C) representative of the medium surrounding the induction coil (8i) as it travels down through the slag layer (2) and into the molten metal (3).

### Time (D)

In the oxygen-configuration of the first embodiment-14, the cap degrades at time (D) after the thermal fuse blew at time (C). The cap (10) of the measuring head (6) is configured for degrading not before the cap (10) reached the molten metal (3), since the function of the cap (10) is to protect the oxygen probe (8o) from any contact with the slag, which could pollute it, jeopardizing the accuracy of the measure. The cap (10) can be configured for degrading chemically by contact with the slag. The cap (10) is, however, preferably degraded thermally as it is driven through the slag layer (2) and into the molten metal (3), to expose the oxygen probe (8o) to the molten metal (3).

**As** from time (D) the analysis device (16) measures a voltage difference, V8(D), representative of the oxygen concentration in the molten metal (3). Since the analysis device (16) measures a voltage difference, Vmes(D) = V8(D), the oxygen concentration of the molten metal can be determined as from time (D) as shown in Figure 14(b) at time (D).

For the induction-configuration, since the induction coil (8i) needs not be in direct contact with the medium to measure the magnetic permeability thereof, the cap (10) needs not degrade and is preferably not degraded during the whole measuring operation. In case the thermal fuse (13) blew as the induction coil (8i) was in the slag layer (2), then the voltage difference measured at time (C) by the analysis device (16) would be representative of the magnetic permeability of the slag. As the measuring lance is driven down and the induction coil (8i) reaches the slag-metal interface (2sm), then the analysis device detects a sharp variation of the voltage difference representative of the magnetic permeability gradient between the slag and the molten metal. This sharp variation of the voltage difference identifies the position of the slag-metal interface (2sm), and the characterization of the position and thickness of the slag layer (2) is thus completed.

If, on the other hand, the thermal fuse (13) blows only after the induction coil (8i) reached the molten metal (3), then the position of the slag-metal interface (2sm) would still be unknown.

### Operating Principle (C, D) - Second Embodiment-15, Sequence (D) - (C)

**As** shown in Figure 15(a), in the second embodiment-15, the cap (10) is degraded at time (D) before the thermal fuse is blown at time (C).

### Time (D)

**As** discussed supra, the cap must degrade for the oxygen-configuration only, since the induction-configuration does not require a direct contact between the medium and the induction coil (8i). In the oxygen-configuration, the cap (10) must not degrade before the cap (10) reaches the molten metal (3) to protect the oxygen probe (8o) from contact with the slag. Since the electric circuit (7) is in the second electrical configuration, the analysis device (16) measures the following voltage differences, Vmes(D), at time (D).
- Slag- and grounded-configurations: the electric circuit (7) is short-circuited and the analysis device (16) measures no voltage difference, i.e., Vmes(D) = 0 V (cf. Figure 15(b) at time (D)).
- Piezo-configuration: the piezoelectric detector (14p) is at the stressed voltage, V14p1, which varies as it travels more deeply through the slag layer (2) and into the molten metal (3). The analysis device (16) measures a voltage difference that varies but which can hardly be exploited as the variations thereof depend on variable parameters.

### Time (C)

**As** discussed supra, by blowing upon exposure to heat, the thermal fuse (13) opens the electric circuit (7) and neutralizes it, in that the electric circuit (7) does not influence the voltage difference measured by the analysis device (16) anymore. Since in the second embodiment-15, the thermal fuse blows after the cap (10) had degraded, and since the cap (10) must degrade only after it reached the molten metal (3), the thermal fuse (13) must blow as the slag-metal interface detection unit (8) is immersed in the molten metal (3).

With the electric circuit thus neutralized, the analysis device (16) measures the voltage difference at the slag-metal interface detection unit (8), representative of the position of the measuring lance in the molten metal, without interference from the electric circuit (i.e., Vmes(C) = V8(C). At this stage, the position of the slag-metal interface (2sm) is unknown for all configurations.

### OPERATING PRINCIPLE (E)

With the electric circuit (7) neutralized, and the slag-metal interface detection unit (8) measuring the properties of the medium surrounding it, as long as the slag-metal interface detection unit (8) remains in the molten metal (3) the analysis device measures a substantially constant voltage difference, Vmes(E) = constant, for all configurations and embodiments (cf. Figures 14(b) and 15(b) at time (E)). The residence time ((E) - (C)) or ((E) - (D)) of the slag-metal interface detection unit (8) in the molten metal must be sufficiently long to ensure that the thermal fuse (13) blew and the cap (10) was degraded for the oxygen-configuration, and as short as safely possible to reduce the total time required for detecting both air-slag interface (2as) and slag-metal interface (2sm). For example, the residence time ((E) - (C)) or ((E) - (D)) of the slag-metal interface detection unit (8) in the molten metal can be comprised between 5 and 8 seconds.

### OPERATING PRINCIPLE (F, G)

**After** a residence time in the molten metal, the measuring lance (1) can be driven up and out of the molten metal along the vertical component parallel to the vertical axis (Z), driving the slag-metal interface detection unit (8) out of the molten metal (3) through the slag-metal interface (2sm) and the slag layer (2) into the atmosphere (4). The slag-metal interface detection unit (8) traverses the slag-metal interface (2sm) at time (F), as represented in Figures 13, 14(a), and 15(a). As from the latest of times (C) and (D), the analysis device (16) measures a voltage difference representative of the properties of the medium surrounding the slag-metal interface detection unit (8).

**When** the slag-metal interface detection unit (8) traverses the slag-metal interface (2sm), the voltage difference, Vmes(F) measured by the analysis device (16) varies suddenly.
- Oxygen-configuration: because the oxygen concentration of the slag differs from the one in the molten metal, and
- Induction-configuration: because the magnetic permeability of the slag differs from the one of the molten metal.

This sudden variation of the voltage difference measured by the analysis device identifies the position of the slag-metal interface (2sm). At this point, the measurement of the position and thickness of the slag layer (2) is completed, since,
- The position (has) of the air-slag interface (2as) was measured at time (B) with the electric circuit (7) and
- The position (hsm) of the slag-metal interface (2sm) was measured at time (F) with the slag-metal interface detection unit (8).

The measuring lance can be withdrawn completely out of the vessel. The slag-metal interface detection unit (8) keeps measuring properties of the media being traversed thereby, but in the case of the oxygen-configuration illustrated in Figure 19, the oxygen probe (8o) is likely contaminated by impurities as it travelled across the slag layer (2), disrupting the reliability of the measures, as shown in Figures 14(b) and 15(b) by a wavy curve of the voltage difference after time (F) and at time (G).

The oxygen-configuration has the additional constraint over the inductive-configuration that the cap (10) must be degraded in the time period separating the two crossings of the slag-metal interface (2sm) by the detection unit (8) in the way down into the vessel and then in the way up, out of the vessel. An advantage of the oxygen-configuration is that, beside the position and thickness of the slag layer (2), the oxygen probe (8o) also yields the oxygen concentration in the molten metal and slag layer, which is an important information.

### PRIOR ART MEASURING LANCE

Figure 21 is a schematic representation of an example of a measuring lance according to the prior art US7876095, which shares at least the functionalities of measuring the positions (has, hsm) of the air-slag interface (2as) and the slag-metal interface (2sm) with the measuring lance (1) according to the invention represented in Figures 9 and 10. The slag-metal interface detection unit of the measuring lance of US7876095 comprises,
- an electric circuit for detecting the position (has) of the air-slag interface, and
- an induction coil (8i) configured for detecting the position (hsm) of the slag-metal interface

The oscillations generated by an oscillator coupled to the induction coil (8i) are representative of the magnetic permeability of the medium surrounding it. As the induction coil approaches the conductive molten metal, the oscillations dampen until stopping when immerged in the molten metal. The damping of the oscillations is representative of the position (hsm) of the slag-metal interface.

In the measuring lance according to US7876095 and comprising no thermal fuse (13), an extra analysis device (16e) connected to the ground potential and to the electric circuit (7) is thus required for detecting a short-circuit between the first conducting element (11) and the ground potential when the electrical contact touches the air-slag interface (2as) at time (B).

With a measuring lance according to the embodiment of the invention illustrated in Figures 9 and 10, which is provided with the thermal fuse (13), the first conducting element (11) of the electrical circuit (7) can be coupled to any one of the first and second electric measuring and sensor terminals (8ta, 8tb, 9ta, 9tb), and as the number of electric terminals has remained the same as without an electric circuit, no extra analysis device is required and the same analysis device can be used alone.

Figure 22 represents a combination of the measuring lances of US7876095 and of the present invention, wherein the first conducting element (11) is connected to the first electric measuring terminal (8ta) and differing from the embodiment illustrated in Figure 9, in that the electric circuit (7) comprises no thermal fuse (13). Without the thermal fuse (13), as from the moment that the electric circuit (7) is short circuited as it passes into the second electrical configuration upon contact of the first conductive element (11) with the air-slag interface, the measuring lance (1) cannot measure any value of the magnetic permeability of the media it traverses thereafter. With no mechanism to neutralize the short-circuited electric circuit (7), the analysis device (16) continuously measures no voltage difference at any time after time (B) i.e., Vmes = 0 V, for all times > (B). The analysis device (16) thus measures no voltage difference at time (F) and cannot identify the vertical position of the slag-metal interface (2sm).

| **Ref #** | **Definition** |
|---|---|
| 1 | Measuring lance |
| 2 | Slag layer |
| 2as | Air-slag interface |
| 2sm | Slag-metal interface |
| 3 | Molten metal |
| 4 | Atmosphere |
| 5 | Carrier tube |
| 5p | Proximal end of the carrier tube |
| 5d | Distal end of the carrier tube |
| 6 | Measuring unit |
| 7 | Electric circuit |
| 8 | Slag-metal interface detection unit |
| 8c | Oxygen cell |
| 8i | Induction coil |
| 8o | Oxygen probe |
| 8r | Reference electrode |
| 8ta | First electric measuring terminal |
| 8tb | Second electric measuring terminal |
| 9 | Sensor unit |
| 9ta | First electric sensor terminal |
| 9tb | Second electric sensor terminal |
| 10 | Cap |
| 10s | External surface of the cap |
| 11 | First conducting element |
| 12 | Second conducting element |
| 13 | Thermal fuse |
| 14 | Contact sensor |
| 14a | First member of the mechanical switch |
| 14b | Second member of the mechanical switch |
| 14p | Piezoelectric detector |
| 14s | Mechanical switch |
| 15 | Thermocouple |
| 16 | Analysis device |
| 17 | Resilient member |
| 21 | Ladle |
| 22 | Tundish |
| 23 | Mould |
| has | Position of the air-slag interface |
| hsm | Position of the slag-metal interface |

## Claims

1. Measuring lance (1) for measuring a position (has) of an air-slag interface (2as) between an atmosphere (4) and a slag layer (2) sitting on top of a molten metal (3), and a position (hsm) of a slag-metal interface (2sm) between the slag layer (2) and the molten metal (3) in a single measurement run, comprising:
• a carrier tube (5) extending along an axis (X) between a proximal end (5p) and a distal end (5d) located downstream of the proximal end (5p),
• a measuring unit (6) coupled to the distal end (5d) of the carrier tube (5) and configured for passing through the slag layer (2), the measuring unit (6) comprising,
∘ an electric circuit (7) configured for detecting the air-slag interface (2as),
∘ a slag-metal interface detection unit (8) located downstream of the distal end (5d), comprising at least first and second electric measuring terminals (8ta, 8tb), and configured for measuring values of a first material property at the position (hsm) of the slag-metal interface (2sm) between the slag layer (2) and the molten metal (3), and
∘ preferably a sensor unit (9) comprising first and second electric sensor terminals (9ta, 9tb) and configured for measuring values of a second material property of the slag layer (2) and of the molten metal (3),
∘ a cap (10) enclosing the slag-metal interface detection unit (8) and optionally the sensor unit (9), configured for separating the slag-metal interface detection unit (8) from an outer environment,
wherein the electric circuit (7) comprises a first conducting element (11) comprising a first end conductively coupled to the first electric measuring terminal (8ta) and / or to the first electric sensor terminal (9ta), and a second end arranged outside of the cap (10), preferably downstream of the cap (10), and
wherein the term "downstream" is defined along the axis (X) in the direction running from the proximal end (5p) to the distal end (5d), and **characterized in that** the electric circuit (7) comprises a thermal fuse (13) located between the first end and the second end of the first conducting element (11) and configured for thermally blowing to open the electric circuit (7) after the first conducting element (11) contacted the air-slag interface (2as).

2. Measuring lance (1) according to claim 1, comprising the sensor unit (9) which is a thermocouple (15), wherein the first and second electric sensor terminals (9ta, 9tb) are configured for electrically connecting to an analysis device (16), wherein the analysis device is preferably a voltage measurement device.

3. Measuring lance (1) according to claim 1 or 2, wherein the slag-metal interface detection unit (8) comprises an oxygen probe (8o) for measuring a concentration of oxygen, comprising an oxygen cell (8c) connected to the first electric measuring terminal (8ta) and a reference electrode (8r) connected to the second electric measuring terminal (8tb), wherein the cap (10) is configured for degrading to expose the oxygen probe (8o) to a surrounding environment upon exposure to a predefined temperature for a predefined exposure time, and wherein the thermal fuse (13) is preferably configured for thermally blowing at the latest once the cap (10) is degraded.

4. Measuring lance (1) according to claim 1 or 2, wherein the slag-metal interface detection unit (8) comprises an induction coil (8i) for detecting a change in magnetic permeability of the surrounding environment.

5. Measuring lance (1) according to any one of the preceding claims, wherein :
• the first end of the first conducting element (11) is conductively coupled to the first electric measuring terminal (8ta) and the second end thereof is conductively coupled to a contact sensor (14),
• the electric circuit (7) comprises a second conducting element (12) comprising a first end conductively coupled to the second electric measuring terminal (8tb), and a second end thereof conductively coupled to the contact sensor (14).

6. Measuring lance (1) according to any one of claims 1 to 4, wherein :
• the first end of the first conducting element (11) is conductively coupled to the first electric sensor terminal (9ta) and the second end thereof is conductively coupled to a contact sensor (14),
• the electric circuit (7) comprises a second conducting element (12) comprising a first end conductively coupled to the second electric sensor terminal (9tb), and a second end thereof conductively coupled to the contact sensor (14).

7. Measuring lance (1) according to any one of claim 5 or 6, wherein the contact sensor (14) is selected between,
• a mechanical switch (14s) biased in an open position and configured to move into a closed position upon application of a mechanical force corresponding to a force generated upon contacting the mechanical switch (14s) with the air-slag interface (2as), to conductively connect the first and second conducting elements (11, 12), wherein the thermal fuse (13) is configured for thermally blowing once the switch (14s) is in the closed position, or
• a piezoelectric detector (14p) configured for generating an electrical current upon application of a mechanical force corresponding to a force generated upon contacting the piezoelectric detector (14p) with the air-slag interface (2as), wherein the thermal fuse (13) is configured for thermally blowing after the piezoelectric detector (14p) has generated the electrical current.

8. Measuring lance (1) according to any one of claims 5 to 7, wherein a portion of an external surface (10s) of the cap (10) is conductive and is comprised in one of the first or second conducting elements (11, 12).

9. Measuring lance (1) according to claim 7, wherein the mechanical switch (14s) comprises,
• a second member (14b) belonging to the second conducting element (12) and solidly attached to the cap (10), and
• a first member (14a) belonging to the first conducting element (11) and non-conductively separated from the second member (14b) and attached to the cap (10) through a resilient member (17), wherein the resilient member (17) is biased for separating the first member (14a) from the second member (14b), and for deforming upon application of the mechanical force, to conductively connect the first and second members (14a, 14b).

10. Measuring lance (1) according to the claim 6, comprising the sensor unit (9), wherein,
• the first end of the first conducting element (11) is electrically coupled to both oxygen cell (8c) of the oxygen probe (8o) **and** first electric sensor terminal (9ta), **or**
• the second conducting element (12) is connected to both reference electrode (8r) of the oxygen probe (8o) **and** second electric sensor terminal (9tb).

11. Method for determining in a metallurgic container a position (has) of an air-slag interface (2as) between an atmosphere (4) and a slag layer (2) sitting on top of a molten metal (3), and a position (hsm) of a slag-metal interface (2sm) between the slag layer (2) and the molten metal (3), comprising:
- position a measuring lance (1) according to anyone of the preceding claims above the air-slag interface (2as) with the second end of the first conducting element (11) positioned closest to the air-slag interface (2as),
- start measuring a vertical position of the measuring lance (1) along a vertical axis (Z) substantially normal to the air-slag interface (2as),
- start measuring values of the first material property with the slag-metal interface detection unit (8),
- start measuring an electrical property of the first conducting element (11),
- translate the measuring lance along at least a vertical component parallel to the vertical axis (Z), downwards, towards the air-slag interface (2as),
- upon detection of a gradient in the electrical property of the first conducting element (11) indicative that the second end of the first conducting element (11) has contacted the air-slag interface (2as), recording the vertical position of the measuring lance (1) as the position (has) of the air-slag interface (2as),
- keep translating downwards the measuring lance (1) along the vertical component sufficiently far to ensure that the measuring unit (6) is in the molten metal (3), beyond the slag-metal interface (2sm),
- allow the thermal fuse (13) to blow and thus conductively separating the first end from the second end of the first conducting element (11),
- measure the values of the first material property with the slag-metal interface detection unit (8) and maintain the measuring unit (6) in the molten metal (3) until the measured values of the first material property become substantially constant,
- translating the slag-metal interface detection unit (8) along the vertical component upwards, towards the slag-metal interface (2sm),
- upon detection of a sharp gradient in the values of the first material property measured with the slag-metal interface detection unit (8), recording the vertical position of the measuring lance (1) as the position (hsm) of the slag-metal interface (2sm),
- keep translating upwards the measuring lance (1) along the vertical component until it is totally in the atmosphere (4).

12. Method according to the preceding claim 11, wherein the slag-metal interface detection unit (8) is an oxygen probe (8o) for measuring a concentration of oxygen as defined in claim 3, wherein the measuring lance (1) comprises,
• a sensor unit (9) consisting of a thermocouple (15) for measuring values of a temperature of a surrounding environment, and
• an intelligence for correcting the concentration of oxygen measured by the oxygen probe (8o) as a function of the temperature measured by the thermocouple (15).

## Patentansprüche

1. Messlanze (1) zum Messen einer Position (has) einer Luft-Schlacke-Grenzfläche (2as) zwischen einer Atmosphäre (4) und einer Schlackeschicht (2), die auf einem geschmolzenen Metall (3) aufliegt, und einer Position (hsm) einer Schlacke-Metall-Grenzfläche (2sm) zwischen der Schlackeschicht (2) und dem geschmolzenen Metall (3) in einem einzigen Messdurchlauf, umfassend:
• ein Trägerrohr (5), das sich entlang einer Achse (X) zwischen einem proximalen Ende (5p) und einem distalen Ende (5d) erstreckt, das sich stromabwärts vom proximalen Ende (5p) befindet,
• eine Messeinheit (6), die mit dem distalen Ende (5d) des Trägerrohrs (5) gekoppelt und dazu ausgestaltet ist, die Schlackeschicht (2) zu durchlaufen, wobei die Messeinheit (6) umfasst:
∘ einen elektrischen Schaltkreis (7), der zum Erfassen der Luft-Schlacke-Grenzfläche (2as) ausgestaltet ist,
∘ eine Schlacke-Metall-Grenzflächen-Detektionseinheit (8), die sich stromabwärts vom distalen Ende (5d) befindet, wenigstens einen ersten und einen zweiten elektrischen Messanschluss (8ta, 8tb) umfasst und zum Messen von Werten einer ersten Materialeigenschaft an der Position (hsm) der Schlacke-Metall-Grenzfläche (2sm) zwischen der Schlackeschicht (2) und dem geschmolzenen Metall (3) ausgestaltet ist, und
∘ vorzugsweise eine Sensoreinheit (9), die erste und zweite elektrische Sensoranschlüsse (9ta, 9tb) umfasst und zum Messen von Werten einer zweiten Materialeigenschaft der Schlackeschicht (2) und des geschmolzenen Metalls (3) ausgestaltet ist,
∘ eine Kappe (10), die die Schlacke-Metall-Grenzflächen-Detektionseinheit (8) und optional die Sensoreinheit (9) umschließt und dazu ausgestaltet ist, die Schlacke-Metall-Grenzflächen-Detektionseinheit (8) von einer äußeren Umgebung zu trennen,
wobei der elektrische Schaltkreis (7) ein erstes leitendes Element (11) umfasst, das ein erstes Ende, das leitend mit dem ersten elektrischen Messanschluss (8ta) und/oder dem ersten elektrischen Sensoranschluss (9ta) gekoppelt ist, und ein zweites Ende umfasst, das außerhalb der Kappe (10), vorzugsweise stromabwärts der Kappe (10), angeordnet ist, und
wobei der Begriff "stromabwärts" entlang der Achse (X) in der Richtung definiert ist, die vom proximalen Ende (5p) zum distalen Ende (5d) verläuft, und **dadurch gekennzeichnet, dass** der elektrische Schaltkreis (7) eine Thermosicherung (13) umfasst, die sich zwischen dem ersten Ende und dem zweiten Ende des ersten leitenden Elements (11) befindet und dazu ausgestaltet ist, thermisch auszulösen, um den elektrischen Schaltkreis (7) zu öffnen, nachdem das erste leitende Element (11) die Luft-Schlacke-Grenzfläche (2as) kontaktiert hat.

2. Messlanze (1) nach Anspruch 1, umfassend die Sensoreinheit (9), bei der es sich um ein Thermoelement (15) handelt, wobei der erste und der zweite elektrische Sensoranschluss (9ta, 9tb) zum elektrischen Verbinden mit einem Analysegerät (16) ausgestaltet sind, wobei das Analysegerät vorzugsweise ein Spannungsmessgerät ist.

3. Messlanze (1) nach Anspruch 1 oder 2, wobei die Schlacke-Metall-Grenzflächen-Erfassungseinheit (8) eine Sauerstoffsonde (8o) zum Messen einer Sauerstoffkonzentration umfasst, die eine mit dem ersten elektrischen Messanschluss (8ta) verbundene Sauerstoffzelle (8c) und eine mit dem zweiten elektrischen Messanschluss (8tb) verbundene Referenzelektrode (8r) umfasst, wobei die Kappe (10) dazu ausgestaltet ist, zu degradieren, um die Sauerstoffsonde (8o) einer Umgebung auszusetzen, wenn sie einer vordefinierten Temperatur für eine vordefinierte Expositionszeit ausgesetzt wird, und wobei die Thermosicherung (13) vorzugsweise dazu ausgestaltet ist, spätestens dann thermisch auszulösen, wenn die Kappe (10) degradiert ist.

4. Messlanze (1) nach Anspruch 1 oder 2, wobei die Schlacke-Metall-Grenzflächen-Erfassungseinheit (8) eine Induktionsspule (8i) zum Erfassen einer Änderung der magnetischen Permeabilität der Umgebung umfasst.

5. Messlanze (1) nach einem der vorstehenden Ansprüche, wobei:
• das erste Ende des ersten leitenden Elements (11) leitend mit dem ersten elektrischen Messanschluss (8ta) gekoppelt ist und sein zweites Ende leitend mit einem Kontaktsensor (14) gekoppelt ist,
• der elektrische Schaltkreis (7) ein zweites leitendes Element (12) umfasst, das ein erstes Ende, das leitend mit dem zweiten elektrischen Messanschluss (8tb) gekoppelt ist, und ein zweites Ende, das leitend mit dem Kontaktsensor (14) gekoppelt ist, umfasst.

6. Messlanze (1) nach einem der Ansprüche 1 bis 4, wobei:
• das erste Ende des ersten leitenden Elements (11) leitend mit dem ersten elektrischen Sensoranschluss (9ta) gekoppelt ist und sein zweites Ende leitend mit einem Kontaktsensor (14) gekoppelt ist,
• der elektrische Schaltkreis (7) ein zweites leitendes Element (12) umfasst, das ein erstes Ende, das leitend mit dem zweiten elektrischen Sensoranschluss (9tb) gekoppelt ist, und ein zweites Ende, das leitend mit dem Kontaktsensor (14) gekoppelt ist, umfasst.

7. Messlanze (1) nach einem der Ansprüche 5 oder 6, wobei der Kontaktsensor (14) ausgewählt ist zwischen
• einem mechanischen Schalter (14s), der in einer offenen Position vorgespannt und dazu ausgestaltet ist, sich beim Aufbringen einer mechanischen Kraft, die einer beim Kontaktieren des mechanischen Schalters (14s) mit der Luft-Schlacke-Grenzfläche (2as) erzeugten Kraft entspricht, in eine geschlossene Position zu bewegen, um das erste und das zweite leitende Element leitend zu verbinden (11, 12) leitend zu verbinden, wobei die Thermosicherung (13) dazu ausgestaltet ist, thermisch auszulösen, wenn sich der Schalter (14s) erst einmal in der geschlossenen Position befindet, oder
• einem piezoelektrischen Detektor (14p), der dazu ausgestaltet ist, beim Aufbringen einer mechanischen Kraft, die einer Kraft entspricht, die beim Kontaktieren des piezoelektrischen Detektors (14p) mit der Luft-Schlacke-Grenzfläche (2as) erzeugt wird, einen elektrischen Strom zu erzeugen, wobei die Thermosicherung (13) dazu ausgestaltet ist, thermisch auszulösen, nachdem der piezoelektrische Detektor (14p) den elektrischen Strom erzeugt hat.

8. Messlanze (1) nach einem der Ansprüche 5 bis 7, wobei ein Teil einer Außenfläche (10s) der Kappe (10) leitend ist und in einem von dem ersten oder dem zweiten leitenden Element (11, 12) umfasst ist.

9. Messlanze (1) nach Anspruch 7, wobei der mechanische Schalter (14s) umfasst:
• ein zweites Element (14b), das zum zweiten leitenden Element (12) gehört und fest an der Kappe (10) angebracht ist, und
• ein erstes Element (14a), das zum ersten leitenden Element (11) gehört und nichtleitend vom zweiten Element (14b) getrennt ist und über ein elastisches Element (17) an der Kappe (10) angebracht ist, wobei das elastische Element (17) vorgespannt ist, um das erste Element (14a) vom zweiten Element (14b) zu trennen und sich beim Aufbringen der mechanischen Kraft zu verformen, um das erste und das zweite Element (14a, 14b) leitend zu verbinden.

10. Messlanze (1) nach Anspruch 6, umfassend die Sensoreinheit (9), wobei
• das erste Ende des ersten leitenden Elements (11) elektrisch sowohl mit der Sauerstoffzelle (8c) der Sauerstoffsonde (8o) als auch mit dem ersten elektrischen Sensoranschluss (9ta) gekoppelt ist, oder
• das zweite leitende Element (12) sowohl mit der Referenzelektrode (8r) der Sauerstoffsonde (8o) als auch mit dem zweiten elektrischen Sensoranschluss (9tb) verbunden ist.

11. Verfahren zum Bestimmen einer Position (has) einer Luft-Schlacke-Grenzfläche (2as) zwischen einer Atmosphäre (4) und einer auf einem geschmolzenen Metall (2) liegenden Schlackeschicht (3) sowie einer Position (hsm) einer Schlacke-Metall-Grenzfläche (2sm) zwischen der Schlackeschicht (2) und dem geschmolzenen Metall (3) in einem metallurgischen Behälter, umfassend:
- Positionieren einer Messlanze (1) nach einem der vorstehenden Ansprüche oberhalb der Luft-Schlacke-Grenzfläche (2as), wobei das zweite Ende des ersten leitenden Elements (11) am nächsten zur Luft-Schlacke-Grenzfläche (2as) positioniert ist,
- Beginnen der Messung einer vertikalen Position der Messlanze (1) entlang einer vertikalen Achse (Z), die im Wesentlichen senkrecht zur Luft-Schlacke-Grenzfläche (2as) verläuft,
- Beginnen der Messung von Werten der ersten Materialeigenschaft mit der Schlacke-Metall-Grenzflächen-Detektionseinheit (8),
- Beginnen der Messung einer elektrischen Eigenschaft des ersten leitenden Elements (11),
- Verschieben der Messlanze entlang wenigstens einer vertikalen Komponente parallel zur vertikalen Achse (Z) nach unten in Richtung der Luft-Schlacke-Grenzfläche (2as),
- bei Erfassung eines Gradienten in den elektrischen Eigenschaften des ersten leitenden Elements (11), der darauf hinweist, dass das zweite Ende des ersten leitenden Elements (11) die Luft-Schlacke-Grenzfläche (2as) kontaktiert hat, Aufzeichnen der vertikalen Position der Messlanze (1) als die Position (has) der Luft-Schlacke-Grenzfläche (2as),
- Fortführen des Verschiebens der Messlanze (1) entlang der vertikalen Komponente so weit nach unten, dass sichergestellt wird, dass die Messeinheit (6) sich in dem geschmolzenen Metall (3), jenseits der Schlacke-Metall-Grenzfläche (2sm), befindet.
- Zulassen, dass die Thermosicherung (13) auslöst und dadurch das erste Ende vom zweiten Ende des ersten leitenden Elements (11) hinsichtlich der Leitfähigkeit trennt,
- Messen der Werte der ersten Materialeigenschaft mit der Schlacke-Metall-Grenzflächen-Erfassungseinheit (8) und Halten der Messeinheit (6) in dem geschmolzenen Metall (3), bis die gemessenen Werte der ersten Materialeigenschaft im Wesentlichen konstant werden,
- Verschieben der Schlacke-Metall-Grenzflächen-Detektionseinheit (8) entlang der vertikalen Komponente nach oben in Richtung der Schlacke-Metall-Grenzfläche (2sm),
- bei Erfassung eines scharfen Gradienten in den Werten der ersten Materialeigenschaft, die mit der Schlacke-Metall-Grenzflächen-Erfassungseinheit (8) gemessen wurden, Aufzeichnen der vertikalen Position der Messlanze (1) als die Position (hsm) der Schlacke-Metall-Grenzfläche (2sm),
- Fortführen des Verschiebens der Messlanze (1) entlang der vertikalen Komponente nach oben, bis sie sich vollständig in der Atmosphäre (4) befindet.

12. Verfahren nach dem vorstehenden Anspruch 11, wobei die Schlacke-Metall-Grenzflächen-Erfassungseinheit (8) eine Sauerstoffsonde (8o) zum Messen einer Sauerstoffkonzentration wie in Anspruch 3 definiert ist, wobei die Messlanze (1) umfasst,
• eine Sensoreinheit (9), bestehend aus einem Thermoelement (15) zum Messen von Werten einer Temperatur einer Umgebung, und
• eine Intelligenz zum Korrigieren der von der Sauerstoffsonde (8o) gemessenen Sauerstoffkonzentration in Abhängigkeit von der vom Thermoelement (15) gemessenen Temperatur.

## Revendications

1. **Lance** de mesure (1) pour mesurer une position (has) d'une interface air-laitier (2as) entre une atmosphère (4) et une couche de laitier (2) reposant au-dessus d'un métal en fusion (3), et une position (hsm) d'une interface laitier-métal (2sm) entre la couche de laitier (2) et le métal en fusion (3) en un seul cycle de mesure, comprenant :
• un tube porteur (5) s'étendant le long d'un axe (X) entre une extrémité proximale (5p) et une extrémité distale (5d) située en aval de l'extrémité proximale (5p),
• une unité de mesure (6) couplée à l'extrémité distale (5d) du tube porteur (5) et configurée pour traverser la couche de laitier (2), l'unité de mesure (6) comprenant,
o un circuit électrique (7) configuré pour détecter l'interface air-laitier (2as),
o une unité de détection d'interface laitier-métal (8) située en aval de l'extrémité distale (5d), comprenant au moins des première et seconde bornes de mesure électrique (8ta, 8tb), et configurée pour mesurer des valeurs d'une première propriété de matériau à la position (hsm) de l'interface laitier-métal (2sm) entre la couche de laitier (2) et le métal en fusion (3), et
o de préférence une unité capteur (9) comprenant des première et seconde bornes de capteur électrique (9ta, 9tb) et configurée pour mesurer des valeurs d'une seconde propriété de matériau de la couche de laitier (2) et du métal en fusion (3),
o un capuchon (10) enfermant l'unité de détection d'interface laitier-métal (8) et optionnellement l'unité capteur (9), configuré pour séparer l'unité de détection d'interface laitier-métal (8) d'un environnement extérieur,
dans lequel le circuit électrique (7) comprend un premier élément conducteur (11) comprenant une première extrémité couplée par conduction à la première borne de mesure électrique (8ta) et / ou à la première borne de capteur électrique (9ta), et une seconde extrémité disposée à l'extérieur du capuchon (10), de préférence en aval du capuchon (10), et
dans lequel le terme « en aval » est défini le long de l'axe (X) dans la direction allant de l'extrémité proximale (5p) vers l'extrémité distale (5d), et **caractérisée en ce que** le circuit électrique (7) comprend un fusible thermique (13) situé entre la première extrémité et la seconde extrémité du premier élément conducteur (11) et configuré pour fondre thermiquement pour ouvrir le circuit électrique (7) après que le premier élément conducteur (11) a contacté l'interface air-laitier (2as).

2. Lance de mesure (1) selon la revendication 1, comprenant l'unité capteur (9) qui est un thermocouple (15), dans laquelle les première et seconde bornes de capteur électrique (9ta, 9tb) sont configurées pour être électriquement connectées à un dispositif d'analyse (16), dans laquelle le dispositif d'analyse est de préférence un dispositif de mesure de tension.

3. Lance de mesure (1) selon la revendication 1 ou 2, dans laquelle l'unité de détection d'interface laitier-métal (8) comprend une sonde à oxygène (8o) pour mesurer une concentration d'oxygène, comprenant une cellule à oxygène (8c) connectée à la première borne de mesure électrique (8ta) et une électrode de référence (8r) connectée à la seconde borne de mesure électrique (8tb), dans laquelle le capuchon (10) est configuré pour se dégrader afin d'exposer la sonde à oxygène (8o) à un milieu environnant lors d'une exposition à une température prédéfinie pendant un temps d'exposition prédéfini, et dans laquelle le fusible thermique (13) est de préférence configuré pour fondre thermiquement au plus tard lorsque le capuchon (10) est dégradé.

4. Lance de mesure (1) selon la revendication 1 ou 2, dans laquelle l'unité de détection d'interface laitier-métal (8) comprend une bobine d'induction (8i) pour détecter un changement de perméabilité magnétique du milieu environnant.

5. Lance de mesure (1) selon l'une quelconque des revendications précédentes, dans laquelle :
• la première extrémité du premier élément conducteur (11) est couplée par conduction à la première borne de mesure électrique (8ta) et la seconde extrémité est couplée par conduction à un capteur de contact (14),
• le circuit électrique (7) comprend un second élément conducteur (12) comprenant une première extrémité couplée par conduction à la seconde borne de mesure électrique (8tb), et une seconde extrémité couplée par conduction au capteur de contact (14).

6. Lance de mesure (1) selon l'une quelconque des revendications 1 à 4, dans laquelle :
• la première extrémité du premier élément conducteur (11) est couplée par conduction à la première borne de capteur électrique (9ta) et la seconde extrémité est couplée par conduction à un capteur de contact (14),
• le circuit électrique (7) comprend un second élément conducteur (12) comprenant une première extrémité couplée par conduction à la seconde borne de capteur électrique (9tb), et une seconde extrémité couplée par conduction au capteur de contact (14).

7. Lance de mesure (1) selon l'une quelconque des revendications 5 ou 6, dans laquelle le capteur de contact (14) est sélectionné parmi,
• un interrupteur mécanique (14s) sollicité vers une position ouverte et configuré pour se déplacer vers une position fermée lors de l'application d'une force mécanique correspondant à une force générée lors du contact de l'interrupteur mécanique (14s) avec l'interface air-laitier (2as), pour connecter par conduction le premier et le second éléments conducteurs (11, 12), dans laquelle le fusible thermique (13) est configuré pour fondre thermiquement une fois que l'interrupteur (14s) est dans la position fermée, ou
• un détecteur piézoélectrique (14p) configuré pour générer un courant électrique lors de l'application d'une force mécanique correspondant à une force générée lors du contact du détecteur piézoélectrique (14p) avec l'interface air-laitier (2as), dans laquelle le fusible thermique (13) est configuré pour fondre thermiquement après que le détecteur piézoélectrique (14p) a généré le courant électrique.

8. Lance de mesure (1) selon l'une quelconque des revendications 5 à 7, dans laquelle une portion d'une surface externe (10s) du capuchon (10) est conductrice et est comprise dans l'un des premier ou second éléments conducteurs (11, 12).

9. Lance de mesure (1) selon la revendication 7, dans laquelle l'interrupteur mécanique (14s) comprend,
• un second élément (14b) appartenant au second élément conducteur (12) et solidairement fixé au capuchon (10), et
• un premier élément (14a) appartenant au premier élément conducteur (11) et séparé sans conduction du second élément (14b) et fixé au capuchon (10) par l'intermédiaire d'un élément résilient (17), dans laquelle l'élément résilient (17) est sollicité pour séparer le premier élément (14a) du second élément (14b), et pour se déformer lors de l'application de la force mécanique, afin de connecter par conduction les premier et second éléments (14a, 14b).

10. Lance de mesure (1) selon la revendication 6, comprenant l'unité capteur (9), dans laquelle,
• la première extrémité du premier élément conducteur (11) est électriquement couplée à la fois à la cellule à oxygène (8c) de la sonde à oxygène (8o) et à la première borne de capteur électrique (9ta), ou
• le second élément conducteur (12) est connecté à la fois à l'électrode de référence (8r) de la sonde à oxygène (8o) et à la seconde borne de capteur électrique (9tb).

11. Procédé pour déterminer dans un récipient métallurgique une position (has) d'une interface air-laitier (2as) entre une atmosphère (4) et une couche de laitier (2) reposant au-dessus d'un métal en fusion (3), et une position (hsm) d'une interface laitier-métal (2sm) entre la couche de laitier (2) et le métal en fusion (3), comprenant :
- positionner une lance de mesure (1) selon l'une quelconque des revendications précédentes au-dessus de l'interface air-laitier (2as) avec la seconde extrémité du premier élément conducteur (11) positionnée la plus proche de l'interface air-laitier (2as),
- commencer à mesurer une position verticale de la lance de mesure (1) le long d'un axe vertical (Z) sensiblement normal à l'interface air-laitier (2as),
- commencer à mesurer des valeurs de la première propriété de matériau avec l'unité de détection d'interface laitier-métal (8),
- commencer à mesurer une propriété électrique du premier élément conducteur (11),
- translater la lance de mesure le long d'au moins une composante verticale parallèle à l'axe vertical (Z), vers le bas, en direction de l'interface air-laitier (2as),
- lors de la détection d'un gradient de la propriété électrique du premier élément conducteur (11) indiquant que la seconde extrémité du premier élément conducteur (11) a contacté l'interface air-laitier (2as), enregistrer la position verticale de la lance de mesure (1) comme la position (has) de l'interface air-laitier (2as),
- continuer à translater vers le bas la lance de mesure (1) le long de la composante verticale suffisamment loin pour garantir que l'unité de mesure (6) est dans le métal en fusion (3), au-delà de l'interface laitier-métal (2sm),
- permettre au fusible thermique (13) de fondre et interrompant ainsi la conduction entre la première extrémité et la seconde extrémité du premier élément conducteur (11),
- mesurer les valeurs de la première propriété de matériau avec l'unité de détection d'interface laitier-métal (8) et maintenir l'unité de mesure (6) dans le métal en fusion (3) jusqu'à ce que les valeurs mesurées de la première propriété de matériau deviennent sensiblement constantes,
- translater l'unité de détection d'interface laitier-métal (8) le long de la composante verticale vers le haut, en direction de l'interface laitier-métal (2sm),
- lors de la détection d'un gradient prononcé dans les valeurs de la première propriété de matériau mesurées avec l'unité de détection d'interface laitier-métal (8), enregistrer la position verticale de la lance de mesure (1) comme la position (hsm) de l'interface laitier-métal (2sm),
- continuer à translater vers le haut la lance de mesure (1) le long de la composante verticale jusqu'à ce qu'elle soit totalement dans l'atmosphère (4).

12. Procédé selon la revendication 11 précédente, dans lequel l'unité de détection d'interface laitier-métal (8) est une sonde à oxygène (8o) pour mesurer une concentration d'oxygène telle que définie dans la revendication 3, dans lequel la lance de mesure (1) comprend,
• une unité capteur (9) constituée d'un thermocouple (15) pour mesurer des valeurs d'une température d'un milieu environnant, et
• une intelligence pour corriger la concentration d'oxygène mesurée par la sonde à oxygène (8o) comme une fonction de la température mesurée par le thermocouple (15).
